Europäisches Patentamt

European Patent Office

Office européen des brevets

(19)

(11) **EP 1 037 196 B1**

(12) **FASCICULE DE BREVET EUROPEEN**

(45) Date de publication et mention
de la délivrance du brevet:
**06.10.2004 Bulletin 2004/41**

(51) Int Cl.⁷: **G10L 19/02**, G10L 19/14

(21) Numéro de dépôt: **00400714.2**

(22) Date de dépôt: **15.03.2000**

(54) **Procédé de codage, de décodage et de transcodage audio**

Verfahren zur Kodierung, Dekodierung und Transkodierung eines Audiosignals

Method for coding, decoding and transcoding an audio signal

(84) Etats contractants désignés:
**AT BE CH CY DE DK ES FI FR GB GR IE IT LI LU
MC NL PT SE**

(30) Priorité: **17.03.1999 FR 9903323**

(43) Date de publication de la demande:
**20.09.2000 Bulletin 2000/38**

(73) Titulaire: **NORTEL NETWORKS France
78117 Châteaufort (FR)**

(72) Inventeurs:
• **Murgia, Carlo
Irvine, CA 92618 (US)**

• **Richard, Gael
78140 Velizy (FR)**
• **Lockwood, Philip
95490 Vaureal (FR)**

(74) Mandataire: **Verdure, Stéphane
Cabinet Plasseraud
65/67 rue de la Victoire
75440 Paris Cedex 09 (FR)**

(56) Documents cités:
**EP-A- 0 746 116          WO-A-97/21211
FR-A- 2 766 032          US-A- 4 790 016**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

La présente invention concerne le codage de signaux audiofréquence, et plus particulièrement les procédés de codage, de décodage et éventuellement de transcodage faisant appel à une analyse spectrale du signal.

Une partie au moins d'un tel codec opère sur des composantes spectrales du signal, qui peuvent résulter d'un décomposition en sous-bandes, ou encore d'une transformée vers le domaine fréquentiel (transformée de Fourier, transformée en cosinus...). Dans la suite de la présente description, on illustrera plus particulièrement l'invention dans le contexte d'un codec utilisant une décomposition en sous-bandes, sans que ceci soit limitatif.

L'invention se pose le problème de l'échelonnabilité (« scalability ») du flux binaire transmis entre un codeur et un décodeur. Cette propriété consiste en la capacité du codeur de construire des flux de sortie de débit variable à partir d'un même schéma de codage appliqué au signal numérique codé, et en la capacité correspondante du décodeur de reconstruire une version fidèle du signal.

La difficulté est ici, sans augmenter outre mesure la complexité des circuits employés, de procurer une qualité de codage la plus grande possible pour chaque valeur de débit.

L'échelonnabilité du flux présente une importance particulière dans le cas où le flux est susceptible d'être transporté sur des réseaux à commutation de paquets, tels que des réseaux opérant suivant le protocole IP (« Internet Protocol »). Historiquement, la plupart des codeurs ont été développés pour des applications de diffusion ou de communication en mode circuit, conduisant à des codeurs à débit fixe, ou à débit sélectionné parmi plusieurs valeurs possibles à l'établissement de la connexion. Dans le contexte du mode paquets, il convient que le débit varie plus dynamiquement, afin de pouvoir adapter le flux aux encombrements rencontrés dans le transport des paquets tout en garantissant le maintien de la communication.

La demande de brevet WO99/03210 décrit un codeur audio à flux échelonnable, ayant plusieurs étages de codage. Le premier étage comporte un noyau codeur, pouvant être un codeur normalisé de type CELP (« Code-Excited Linear Prediction) ou autre, et éventuellement un banc de filtres de décomposition en sous-bandes et des modules complémentaires de quantification de sous-bandes plus élevées que celle traitée par le noyau codeur. Le second étage comporte un autre banc de filtres de décomposition en sous-bandes du signal d'erreur résiduelle en sortie du noyau codeur, des modules de quantification des composantes issues de cette décomposition en sous-bandes, et éventuellement des modules complémentaires de quantification des signaux d'erreur résiduelle en sortie des modules de quantification des sous-bandes plus élevées du premier étage. Les signaux d'erreur résiduelle en sortie du second étage peuvent ensuite être traités par un troisième étage, etc. Le flux binaire de sortie de ce codeur est échelonnable en jouant sur le nombre de modules de codage/quantification qui y contribuent. Pour le débit le plus bas, seul le noyau codeur intervient. Pour faire augmenter le débit, on ajoute des composantes et/ou des étages de quantification des erreurs résiduelles.

La demande de brevet WO 97/21211 divulgue un système de codage d'un signal audio multicanaux correspondant en fait à un groupe de cinq signaux associés respectivement à cinq canaux, dans lequel le signal associé à chaque canal est décomposé en trente-deux sous-bandes, une technique dite « *joint frequency coding* » permettant de profiter des corrélations qui existent entre les différents canaux à haute fréquence pour diminuer le nombre de bits alloués globalement au codage des sous-bandes de fréquences élevées, en considérant que ces sous-bandes portent une information identique pour chaque canal en sorte qu'il est suffisant de ne transmettre cette information qu'une seule fois. Toutefois, cette technique ne permet pas de réduire le débit du flux de données pour un unique signal transmis.

Le brevet US 4,790,016 divulgue un procédé de codage de signaux de parole dans lequel le signal à coder est échantillonné pour produire n échantillons qui sont normés et traités par une transformation de Fourier rapide (FFT) afin d'obtenir

$$\left(\frac{N}{2}\right)+1$$

coefficients complexes. Seuls certains coefficients sont quantifiés et transmis, en fonction du facteur d'échelle des sous-bandes correspondantes, les coefficients des sous-bandes qui ne sont pas transmis étant approximés, côté récepteur, en leur donnant la valeur des coefficients d'autres sous-bandes, qui ont eux été transmis

Un but principal de la présente invention est d'obtenir une fine granularité de débit dans l'échelonnabilité du flux binaire, permettant de rechercher le meilleur compromis débit/qualité en fonction des conditions de communication.

Un premier aspect de l'invention se rapporte ainsi à un procédé de décodage d'un flux binaire représentatif d'un signal audio, dans lequel on calcule au moins un ensemble de composantes spectrales à partir d'indices de quantification inclus dans le flux binaire, et on combine les composantes spectrales dudit ensemble lors d'une cons-

**EP 1 037 196 B1**

truction d'une version décodée du signal audio, chaque composante de l'ensemble étant associée à un jeu d'indices de quantification utilisés dans le calcul de cette composante, dans lequel le flux binaire inclut une information d'identification d'au moins une paire de composantes spectrales, chaque paire identifiée comportant une première composante et une seconde composante, et dans lequel on associe la seconde composante spectrale d'au moins une paire identifiée à un jeu d'indices de quantification dont certains au moins des indices sont copiés depuis un jeu d'indices lu dans le flux binaire et associé à la première composante spectrale de ladite paire identifiée.

Cette information d'identification est incluse dans le flux soit par le codeur qui est à son origine, soit par un transcodeur ayant traité le flux entre le codeur et le décodeur.

Un second aspect de l'invention se rapporte à un procédé de décodage d'un flux binaire représentatif d'un signal audio, dans lequel on calcule au moins un ensemble de composantes spectrales à partir d'indice de quantification inclus dans le flux binaire, et on combine les composantes spectrales dudit ensemble lors d'une construction d'une version décodée du signal audio, chaque composante de l'ensemble étant associée à un jeu d'indices de quantification utilisés dans le calcul de cette composante, dans lequel le flux binaire a un débit variable, le procédé comprenant une première phase dans laquelle le flux binaire inclut des jeux d'indices de quantification respectifs pour calculer un premier ensemble de composantes spectrales et dans laquelle on analyse des similitudes entre les composantes spectrales du premier ensemble, et une seconde phase dans laquelle le flux binaire, de débit plus faible que dans la première phase, inclut des jeux d'indices de quantification respectifs pour calculer une partie seulement des composantes spectrales du premier ensemble et dans laquelle on calcule au moins une composante spectrale du premier ensemble n'appartenant pas à ladite partie à partir d'indices au moins partiellement copiés depuis un jeu d'indices de quantification lu dans le flux binaire et associé à une composante appartenant à ladite partie, pour laquelle une similitude maximale a été déterminée dans la première phase.

On est ainsi capable de construire certaines des composantes spectrales, sans nécessairement que tous les indices de quantification correspondants figurent explicitement dans le flux binaire transmis.

En d'autres termes, on peut améliorer la qualité de la restitution du signal codé, en augmentant le nombre de composantes prises en compte, au prix d'une augmentation limitée du débit puisque certains des indices sont recopiés d'une autre bande plutôt que d'être ajoutés au flux.

Si une réduction du débit est nécessaire, il est possible de ne pas transmettre une partie au moins des indices relatifs à une ou plusieurs des bandes tout en conservant la ou les composantes correspondantes, certes avec une moindre précision, dans la reconstruction du signal par le décodeur, de sorte que la dégradation de la qualité est limitée.

Du fait de ces avantages, le procédé convient particulièrement aux codecs à débit variable. Il permet en outre d'obtenir une grande finesse dans les variations de débit autorisées. Dans un mode de réalisation typique, les composantes spectrales de l'ensemble sont traitées par segments temporels successifs, chaque segment temporel d'une composante spectrale étant obtenu par le produit d'une forme d'onde appartenant à un dictionnaire et d'un gain, ladite forme d'onde et ledit gain étant identifiés par des indices de quantification respectifs appartenant au jeu d'indices associé. Dans ce cas, les indices de quantification copiés pour une composante spectrale peuvent comprendre les indices de quantification de formes d'onde relatifs à cette composante spectrale, tandis que les indices de quantification des gains correspondants peuvent être lus indépendamment dans le flux.

(8) Un troisième aspect de la présente invention se rapporte à un procédé de codage d'un signal audio, dans lequel on obtient au moins un ensemble de composantes spectrales à partir du signal audio, et on forme un flux binaire de sortie incluant des indices de quantification de certaines au moins des composantes spectrales. Selon l'invention, on sélectionne au moins une paire de composantes présentant une similitude maximale au sein de l'ensemble de composantes spectrales, et on inclut dans le flux binaire de sortie une information d'identification de chaque paire de composantes sélectionnée, certains au moins des indices de quantification étant inclus dans le flux binaire de sortie pour l'une seulement des composantes de chaque paire sélectionnée.

De façon correspondante, l'invention propose un codeur audio comprenant des moyens pour produire au moins un ensemble de composantes spectrales à partir d'un signal audio, des moyens de calcul d'indices de quantification de certaines au moins des composantes spectrales de l'ensemble, un multiplexeur pour former un flux binaire de sortie incluant certains au moins des indices de quantification calculés, et des moyens d'analyse pour sélectionner au moins une paire de composantes présentant une corrélation maximale au sein de l'ensemble de composantes spectrales, le multiplexeur étant commandé pour inclure dans le flux binaire de sortie une information d'identification de chaque paire de composantes sélectionnée, et pour que certains au moins des indices de quantification soient inclus dans le flux binaire de sortie pour l'une seulement des composantes de chaque paire sélectionnée.

Dans une version de ce codeur, les moyens pour produire l'ensemble de composantes spectrales à partir du signal audio comprennent un banc de filtres de décomposition en sous-bandes du signal audio.

En variante, ces moyens peuvent comprendre un premier étage de codage du signal audio, et un banc de filtres de décomposition en sous-bandes d'un signal d'erreur résiduelle produit par le premier étage de codage (voir demande de brevet WO99/03210).

Ils peuvent encore comprendre un circuit opérant une transformation d'une partie au moins du signal dans

3

le domaine fréquentiel.

L'invention se rapporte également à des procédés de transcodage dont certains sont adaptés aux procédés de décodage et/ou de codage définis ci-dessus. L'invention propose, de façon générale, un procédé de transcodage d'un flux binaire d'entrée représentatif d'un signal audio codé par fenêtres temporelles successives, pour former un flux binaire de sortie de débit plus faible, dans lequel la formation du flux de sortie comprend, pour une fenêtre de signal représentée par un nombre A de bits ordonnés du flux d'entrée, la recopie d'un nombre *A-B* de bits du flux d'entrée et la suppression d'un nombre *B* de bits du flux d'entrée afin de diminuer le débit, et dans lequel on détermine quels bits du flux d'entrée sont à supprimer à partir d'une information reçue d'un décodeur auquel est destiné le flux binaire de sortie.

Ce transcodage, servant à faire baisser le débit binaire, ne se réduit pas à une simple suppression des derniers bits de chaque fenêtre qui, fréquemment, n'est pas optimale. Il est opéré de manière à limiter la dégradation de la qualité qu'implique la diminution du débit, en se fondant sur une information reçue du décodeur situé en aval.

De façon semblable au procédé de codage défini ci-dessus, lorsque le flux binaire d'entrée inclut des jeux d'indices de quantification associés à un ensemble de composantes spectrales respectives, le procédé de transcodage comporte les étapes suivantes : sélectionner au moins une paire de composantes présentant une similitude maximale au sein de l'ensemble de composantes spectrales, maintenir dans le flux binaire de sortie le jeu d'indices de quantification associé à l'une des composantes de chaque paire sélectionnée, supprimer certains au moins des indices du jeu d'indices de quantification associé à l'autre des composantes de chaque paire sélectionnée et inclure dans le flux binaire une information d'identification de chaque paire de composantes spectrales sélectionnée.

Lorsque le flux binaire d'entrée inclut des jeux d'indices de quantification associés à un ensemble de composantes spectrales respectives, une autre possibilité est que les bits supprimés comprennent au moins un jeu d'indices de quantification associé à une composante spectrale.

Le transcodage procède dans ce dernier cas par suppression pure et simple de certaines sous-bandes.

Les sous-bandes à supprimer peuvent être déterminées sur la base de la nature du signal audio codé ou de caractéristiques du décodeur devant le reconstruire (par exemple la largeur de bande du signal ou celle qu'est capable de traiter le décodeur).

Elles sont en tous cas déterminées sur la base d'une information reçue du décodeur. En particulier, dans le cas précédemment mentionné où le décodeur à débit variable analyse le flux lorsque son débit est relativement élevé pour rechercher les similitudes entre les bandes, l'information ainsi obtenue peut être envoyée au transcodeur. Les bandes supprimées lors d'une réduction du débit peuvent alors être choisies à bon escient, c'est-à-dire de façon que le signal reconstruit par le décodeur avec le processus de recopie d'indices ne subisse pas une dégradation trop sensible de sa qualité.

Dans un autre mode de réalisation du procédé de transcodage, le flux binaire d'entrée inclut, pour chaque fenêtre du signal, au moins un indice permettant de retrouver, dans un dictionnaire de référence contenant $2^Q$ vecteurs, un vecteur de paramètres de codage utilisable pour construire une version décodée du signal, ledit indice inclus dans le flux d'entrée étant formé de $Q$-$q$ bits qui, complétés par $q$ bits arbitraires de positions prédéterminées, définissent un groupe de $2^q$ adresses de vecteurs dans le dictionnaire de référence, $q$ étant un entier tel que $q{\geq}0$. Dans le flux de sortie, on remplace l'indice de $Q$-$q$ bits par un indice traduit de $Q$-$p$ bits qui, complétés par $p$ bits arbitraires de positions prédéterminées, définissent un groupe de $2^p$ adresses incluant ledit groupe de $2^q$ adresses, $p$ étant un entier tel que $q{<}p{<}Q$. Le transcodage procède alors par une suppression préférentielle des bits les moins significatifs d'indices de quantification vectorielle, de façon à minimiser l'impact de la réduction du débit sur la qualité du signal que le décodeur est capable de reconstruire.

D'autres particularités et avantages de la présente invention apparaîtront dans la description ci-après d'exemples de réalisation non limitatifs, en référence aux dessins annexés, dans lesquels :

- la figure 1 est un schéma synoptique d'un exemple de codeur audio pouvant mettre en oeuvre l'invention ;
- la figure 2 est un schéma synoptique d'un décodeur associé ;
- la figure 3 est un diagramme illustrant un exemple de structure de flux que peut produire le codeur de la figure 1 ;
- la figure 4 est un diagramme illustrant la construction de dictionnaires de quantification vectorielle utilisables dans des procédés selon l'invention ;
- les figures 5 et 6 sont des schémas synoptiques d'exemples de transcodeurs selon l'invention ;
- les figures 7 et 8 sont deux schémas illustrant la mise en oeuvre de la présente invention dans un serveur audio ;
- la figure 9 est un diagramme illustrant un autre exemple de structure de flux que peut produire un codeur selon l'invention ;
- la figure 10 montre une variante de réalisation du codeur de la figure 1 ;
- la figure 11 est un schéma synoptique d'un exemple de transcodeur mettant en oeuvre l'invention ;
- la figure 12 est un schéma synoptique d'un exemple de décodeur mettant en oeuvre l'invention ; et
- la figure 13 est un schéma synoptique d'un autre exemple de transcodeur mettant en oeuvre l'invention ;

L'invention est décrite ci-après dans son application, non limitative, au codage de signaux audio par un codeur du type décrit dans la demande de brevet WO99/03210, qui permet d'illustrer plusieurs façons de mettre en oeuvre l'invention. On appréciera que l'invention est applicable à de nombreux autres types de codage audio.

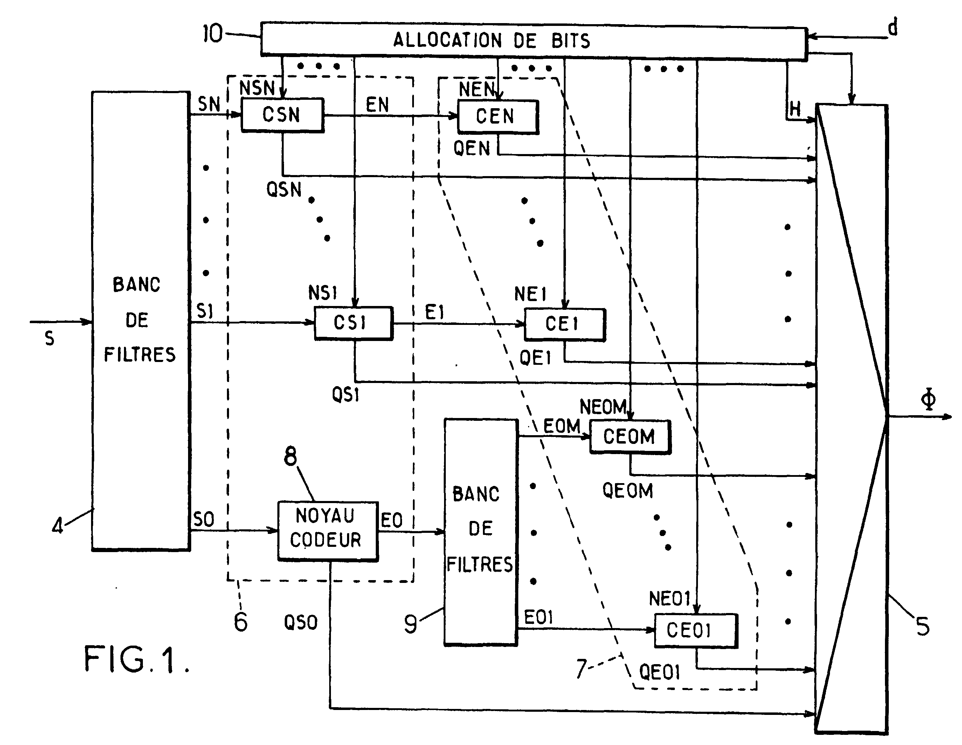

Le codeur représenté sur la figure 1 opère sur des composantes spectrales du signal audio numérique à coder S qui, dans le cas considéré, sont obtenues par décomposition en sous-bandes du signal S au moyen d'un banc de filtres 4 (dans d'autres réalisations, elles pourraient être des composantes spectrales obtenues par transformée de Fourier ou analogue).

Le signal d'entrée S est ainsi décomposé en un signal de base S0 et en un nombre N de signaux de bandes élevées S1-SN. La décomposition en sous-bandes peut être linéaire, chaque sous-bande ayant alors la même largeur spectrale, ou non linéaire. Dans ce dernier cas, les sous-bandes peuvent correspondre à l'échelle des Barks (voir E. Zwicker et al., « Psychoacoustique, l'oreille récepteur d'informations », Editions Masson, Paris, 1981). Si la bande passante du signal d'entrée ne dépasse pas 8 kHz, l'utilisation d'une échelle de Barks dans le banc de filtres 4 n'améliore pas sensiblement l'efficacité du codage, de sorte qu'on peut se dispenser de la plus grande complexité que requiert une décomposition en sous-bandes selon cette échelle.

Pour que le processus de décomposition en sous-bandes ne dégrade pas le signal d'entrée, on utilise un banc de filtres à reconstruction parfaite, constitué par exemple de filtres QMF, ou de préférence de filtres à décomposition en ondelettes de 36 coefficients.

Dans la suite de la présente description, on considérera, sans que ceci soit limitatif, que le signal de base S0 correspond à une bande de base de 0 à 4 kHz, et que les signaux de bandes élevées S1, S2, etc... correspondent aux bandes 4-5 kHz, 5-6 kHz, 6-7 kHz, 7-8 kHz, 8-10 kHz, 10-12 kHz, 12-14 kHz, 14-16 kHz, 16-20 kHz, 20-24 kHz et 24-32 kHz. Une telle croissance de la largeur de bande peut être vue comme une approximation de l'échelle des Barks qu'on peut réaliser avec un banc de filtres de complexité réduite. La liste des bandes élevées donnée ci-dessus correspond au cas où N=11 et convient pour un signal d'entrée dont la bande passante va jusqu'à 32 kHz (fréquence d'échantillonnage de 64 kHz). Pour de moins grandes bandes passantes, le nombre N est plus petit, et seules les N premières bandes de la liste ci-dessus sont utilisées.

Chacun des signaux de bandes élevées S1-SN est soumis à un module de codage respectif CS1-CSN. Chaque module de codage CSn (1≤n≤N) opère une quantification vectorielle du signal Sn qui lui est soumis. Ce signal est découpé en segments successifs formés d'échantillons numériques à une cadence d'échantillonnage moins élevée que celle du signal d'entrée S. Pour chaque segment, le codeur CSn sélectionne une forme d'onde dans un dictionnaire prédéterminé et un gain tels que le signal estimé S'n constitué par cette forme d'onde multipliée par ce gain présente un écart minimal avec le signal Sn. Cet écart constitue un signal d'erreur de quantification, noté En sur le dessin (1≤n≤N). Les méthodes de quantification vectorielle sont bien connues dans le domaine du traitement des signaux audio (voir N. Moreau : « Techniques de compression des signaux », Editions Masson, collection CNET, Paris 1995). Sur chaque fenêtre temporelle constituée par un ou plusieurs segments successifs, les formes d'onde et les gains sélectionnés sont quantifiés sur un nombre NSn de bits. Ces NSn bits forment des paramètres QSn de codage du signal Sn qui sont fournis au multiplexeur 5 formant le flux binaire Φ de sortie du codeur.

Les modules de codage CSn font partie d'un premier étage de codage 6. Le codeur de la figure 1 comporte un second étage de codage 7 incluant N modules CE1-CEN de quantification vectorielle des signaux d'erreur E1-EN respectivement délivrés par les modules CS1-CSn du premier étage. Chaque module CEn (1≤n≤N) procède à la quantification vectorielle du signal d'erreur En pour produire des paramètres de codage QEn, représentés par NEn bits sur chaque fenêtre, et qui sont fournis au multiplexeur de sortie 5.

Pour le codage du signal de base S0, le premier étage 6 comporte un noyau codeur 8 constitué par un codeur normalisé. Des exemples de codeurs normalisés utilisables sont le codeur G.723 (voir « Dual Rate Speech Coder for Multimedia Communication Transmitting at 5.3 and 6.3 kbit/s », Recommandation ITU-T G.723.1, Mars 1996), et le codeur TETRA (voir « Radio Equipment and Systems (RES), Trans-European Trunked Radio (TETRA), Speech codec for full-rate traffic channel, Part 2 : TETRA codec », Recommandation ETSI, Del ETS 300 395-2, 6 Décembre 1996). Ces exemples de codeurs sont des codeurs de parole à analyse par synthèse, c'est-à-dire qu'ils procèdent en minimisant un signal d'erreur E0 égal à la différence entre le signal S0 fourni au noyau codeur et un signal synthétique S'0 construit à partir des paramètres de codage QS0 sélectionnés. Ces paramètres QS0 sont fournis au multiplexeur de sortie 5.

Le signal d'erreur E0 est également disponible en sortie du noyau codeur 8. Ce signal d'erreur est soumis à un autre banc de filtres 9 à décomposition en sous-bandes.

Le banc de filtres 9 est de même nature que le banc de filtres 4. Il opère une décomposition linéaire du signal E0 en M sous-bandes. Le nombre M est par exemple égal à 8, ce qui donne, dans l'exemple précédemment considéré où le signal de base S0 est dans la bande 0-4 kHz, des sous-bandes de largeur 0,5 kHz (échantillonnage à 1 kHz) en sortie du banc de filtres 9.

Les M composantes spectrales du signal d'erreur E0 fournies par le banc de filtres 9 sont notées E01 à E0M. Chacune de ces composantes E0m (1≤m≤M) est soumise à un module de codage respectif CE0m appartenant au second étage 7 du codeur. Ces modules CE0m opèrent par quantification vectorielle, de la même manière que les modules CEn précédemment décrits. Les paramètres de codage délivrés par le module CE0m sont notés QE0m, et représentent un nombre NE0m de bits par fenêtre, qui sont fournis au multiplexeur de sortie 5.

Les nombres de bits NSn, NEn et NE0m sont fournis aux différents modules de quantification vectorielle par une unité 10 d'allocation de bits. Cette unité 10 construit également un en-tête H pour le flux de sortie Φ du codeur. Cet en-tête H décrit la distribution des bits dans le flux binaire. L'unité 10 commande également le multiplexeur 5 pour construire le flux Φ.

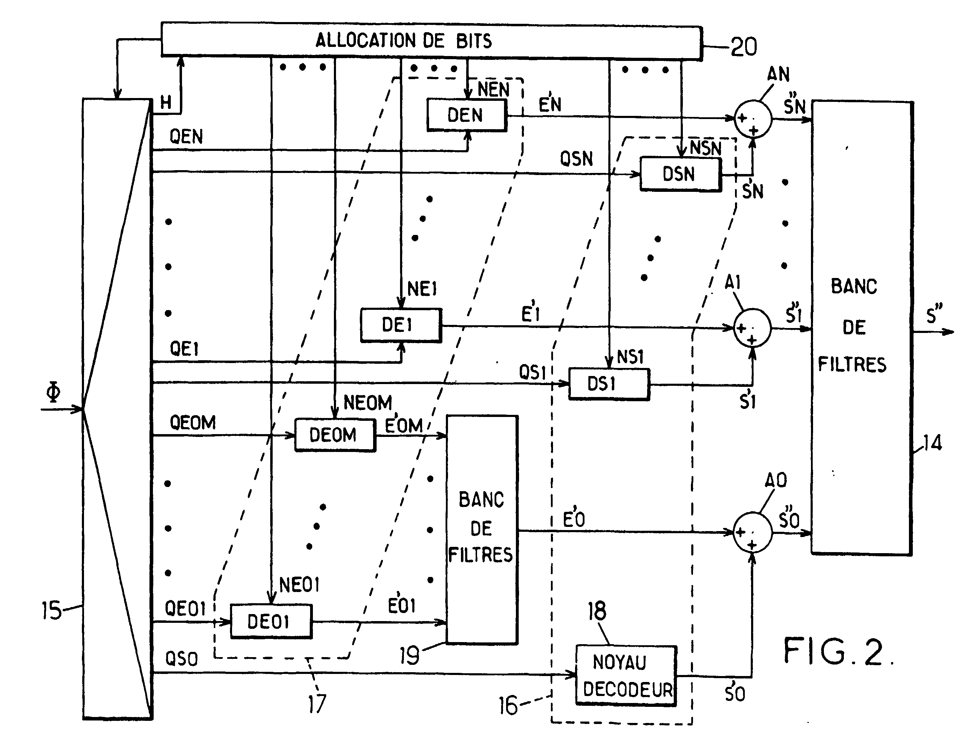

Le décodeur dual représenté sur la figure 2 comporte un démultiplexeur 15 recevant le flux Φ issu du codeur. Le démultiplexeur 15 extrait l'en-tête H et l'adresse à une unité 20 d'allocation de bits. L'unité 20 analyse alors la structure du flux et commande de façon correspondante le démultiplexeur 15 pour qu'il délivre les paramètres pertinents pour les différents modules du décodeur.

Le décodeur comporte un ensemble de modules 17 assurant les opérations inverses des modules de codage du second étage 7 du codeur. L'ensemble 17 comprend ainsi N modules de décodage DE1-DEN qui reconstruisent les estimations E'1-E'N des signaux d'erreur E1-EN, à partir des paramètres de codage QE1-QEN extraits par le démultiplexeur 15. L'ensemble 17 comprend également M modules de décodage DE01-DE0M qui reconstruisent les estimations E'01-E'OM des composantes en sous-bandes E01-E0M du signal d'erreur E0, à partir des paramètres de codage QE01-QE0M extraits par le démultiplexeur 15.

Un banc de filtres de recomposition 19, correspondant au banc de filtres de décomposition 9 du codeur, forme l'estimation E'0 du signal d'erreur E0 à partir des M estimations E'0m de ses composantes en sous-bandes.

Un autre ensemble de modules 16 effectue les opérations de décodage correspondant aux codages effectués dans le premier étage 6 du codeur. Cet ensemble 16 comprend un noyau décodeur 18 qui est un décodeur normalisé associé au noyau codeur 8. Il reconstruit le signal synthétique S'0 du codeur à analyse par synthèse à partir des paramètres de codage QS0 extraits par le démultiplexeur 15. L'ensemble 16 comporte en outre N modules de décodage DS1-DSN qui reconstruisent les estimations S'1-S'N des signaux de bandes élevées S1-SN à partir des paramètres de codage QS1-QSN extraits par le démultiplexeur 15.

N+1 additionneurs A0-AN produisent les N+1 estimations améliorées S"0-S"N des composantes spectrales du signal d'entrée, qui sont soumises à un banc de filtres de recomposition 14. L'additionneur An ($0 \leq n \leq N$) effectue l'opération S"n = S'n + E'n. Le banc de filtres de recomposition 14 correspond au banc de filtres de décomposition 4 du codeur. Il délivre l'estimation finale S" du signal audio d'origine.

Le codeur décrit ci-dessus utilise un étage 6 de codage principal et un étage 7 d'amélioration par quantification des erreurs. Bien entendu, il serait possible de prévoir d'autres étages d'amélioration, un second étage d'amélioration (c'est-à-dire un troisième étage du codeur) procédant alors à une quantification vectorielle des erreurs résiduelles des différents modules de codage du second étage, et ainsi de suite. De façon correspondante, le décodeur associé comporterait alors d'autres ensembles de modules de décodage du type de l'ensemble 17 représenté sur la figure 2.

Le mode d'allocation des bits entre les différents modules de codage dépend de l'application considérée.

L'allocation des bits peut notamment être fixe. Le Tableau I présente un exemple numérique de répartition du débit binaire du flux de sortie entre les différentes sous-bandes et entre les deux étages du codeur (en excluant le débit relatif au noyau codeur). Dans cet exemple numérique, on a choisi N=4 et un signal de base S0 dans la bande 0-4 kHz, échantillonné à 8 kHz. Le signal d'entrée S a donc une bande passante de 8 kHz. Le noyau codeur 8 est par exemple un codeur G.723 qui traite le signal par trames élémentaires de 30 ms (240 échantillons numériques du signal de base). Les quantifications vectorielles sont opérées sur des fenêtres de 60 échantillons, divisées chacune en quatre segments de 15 échantillons. Les fenêtres sont de 60 ms (deux trames élémentaires du codeur G.723) pour les modules CE01-CE08, et de 30 ms (une trame élémentaire du noyau codeur) pour les modules CS1-CS4 et CE1-CE4.

Pour chaque fenêtre, les nombres de bits par sous-bande sont: NE0m=NSn=NEn=56 pour $1 \leq m \leq 8$, $1 \leq n \leq 4$, répartis de la manière suivante :

- 6 bits GG de quantification scalaire d'un gain moyen sur la fenêtre ;
- 6 bits GR de quantification vectorielle de quatre gains résiduels concernant respectivement les quatre segments de la fenêtre ;
- $4 \times Q$=40 bits *IF* constituant les indices de quantification des vecteurs de forme d'onde, chaque indice de *Q*=10 bits étant l'adresse, dans le dictionnaire de taille $2^Q$=1024, de la forme d'onde à utiliser pour l'un des segments ; et
- 4 bits σ représentant les signes affectés aux gains globaux (= gain moyen sur la fenêtre + gains résiduels) relatifs aux quatre segments de la fenêtre.

Tableau I

| Sous-bande (kHz) | Débit 1$^{er}$ étage (kbit/s) | Débit 2$^{eme}$ étage (kbit/s) | Total par sous- bande (kbit/s) |
|---|---|---|---|
| 0-0,5 | - | 0.9333 | 0.9333 |
| 0,5 - 1 | - | 0.9333 | 0.9333 |
| 1 -1,5 | - | 0.9333 | 0.9333 |
| 1 ,5-2 | - | 0.9333 | 0.9333 |
| 2-2,5 | - | 0.9333 | 0.9333 |
| 2,5-3 | - | 0.9333 | 0.9333 |
| 3-3,5 | - | 0.9333 | 0.9333 |
| 3,5-4 | - | 0.9333 | 0.9333 |
| 4-5 | 1.8667 | 1.8667 | 3.7333 |
| 5-6 | 1.8667 | 1.8667 | 3.7333 |
| 6-7 | 1.8667 | 1.8667 | 3.7333 |
| 7-8 | 1.8667 | 1.8667 | 3.7333 |
| TOTAL | 7,4667 | 14,9333 | 22,4 |

L'allocation des bits peut également être modifiée en fonction du débit de sortie d du codeur, en ajoutant ou en supprimant des bandes de fréquences élevées et/ou des étages d'amélioration. Ceci permet au codeur de s'adapter au décodeur qui traitera son flux de sortie et à la bande passante du canal de transmission. Ceci est effectué très simplement en annulant certain des nombres de bits NEn, NSn ou NE0m fournis aux modules de codage.

Ainsi, dans l'exemple numérique du Tableau I et avec un noyau codeur de type G.723, le codeur peut avoir une gamme de débit allant de 6,3 kbit/s à 28,7 kbit/s environ selon la qualité et/ou le débit requis. On observe qu'on a une grande flexibilité et une grande finesse dans l'adaptation du débit du codeur.

L'unité d'allocation 10 peut également examiner les énergies respectives des signaux E0m,Sn,CEn fournis aux modules de codage afin de ne pas transmettre de paramètres de codage d'un signal qui serait d'énergie négligeable.

Le codeur peut également s'adapter à différentes largeurs de bande passante et/ou à différentes fréquences d'échantillonnage du signal d'entrée S. Pour cela, on peut ajouter des bandes élevées dans la décomposition initiale en sous-bandes du signal S. Le noyau codeur utilisé peut lui-même être sélectionné parmi plusieurs noyaux codeurs normalisés (G.723, Tetra, MPEG-2 AAC,...) prévus dans le codeur audio, ces différents noyaux codeurs permettant de traiter des signaux de bandes passantes et/ou de fréquences d'échantillonnage différentes.

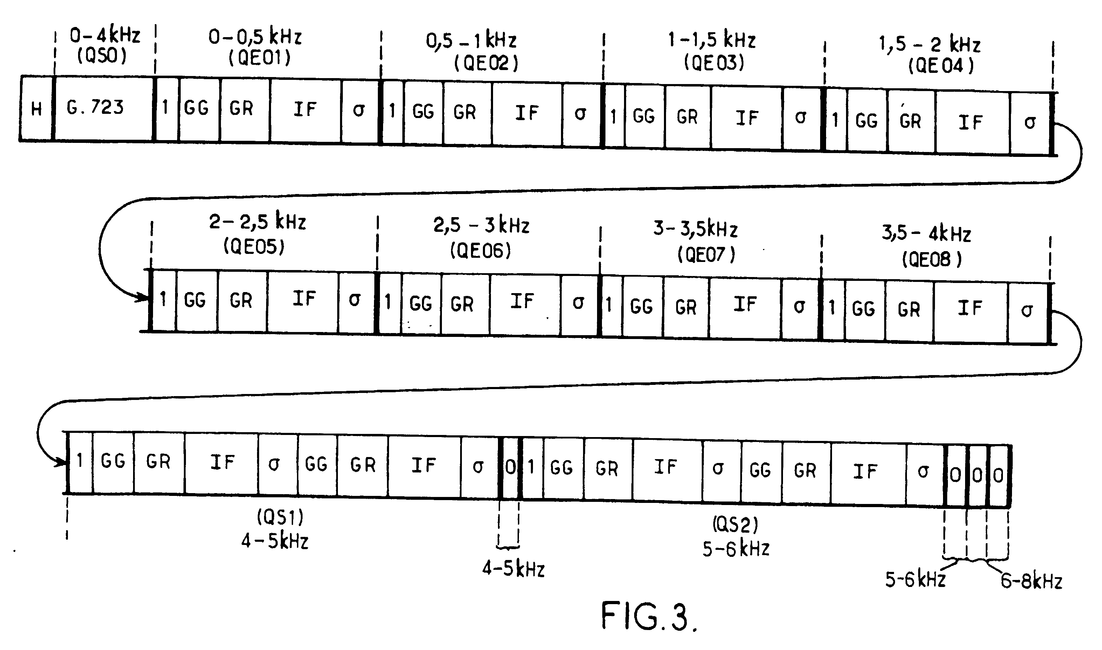

Lorsque l'allocation des bits est variable, il convient d'inclure dans le flux de sortie du codeur des bits d'allocation indiquant les sous-bandes prises en considération. Ces bits d'allocation peuvent être placés dans l'en-tête H du flux. Ils peuvent également être placés avec les bits de quantification correspondants, comme le montre la figure 3.

L'exemple de la figure 3 correspond au cas particulier où l'allocation des bits est telle que les $M$=8 sous-bandes résultant de la décomposition de l'erreur résiduelle E0 du noyau codeur 8, supposé de type G.723 (trames de 30 ms, soit 240 échantillons à 8 kHz), sont prises en considération, de même que les 2 sous-bandes les plus basses parmi les $N$=4 sous-bandes élevées résultant de la décomposition du signal d'entrée $S$ (cf. Tableau I).

Le flux représenté sur la figure 3 correspond à une fenêtre temporelle de 60 ms. On suppose que le processus de codage est en deux étages, c'est-à-dire avec un seul étage d'amélioration. L'en-tête H comporte par exemple quatre bits servant à coder le type du noyau codeur employé (G.723 à 6,3 kbit/s, G.723 à 5,3 kbit/s, Tetra, CELP VM à 5,5 kbit/s, etc.), auxquels s'ajoute un bit indiquant la fréquence d'échantillonnage du signal d'entrée (8 kHz ou 16 kHz).

Après l'en-tête H se trouvent les bits représentant les paramètres QS0 fournis par le noyau codeur selon le format normalisé. Dans l'exemple considéré, la fenêtre inclut deux trames G.723, formant la contribution au flux de la bande de base 0-4 kHz pour le premier étage de codage.

Les paramètres G.723 sont suivis par des champs relatifs aux sous-bandes issues de la décomposition du signal d'erreur E0 du noyau codeur, considérées dans l'ordre des fréquences croissantes. Chacun de ces champs se rapporte au second étage du codeur, et commence par le bit d'allocation. Si ce bit d'allocation vaut 1 (pour chacune des huit sous-bandes dans le cas considéré), le flux inclut des paramètres QE0m de codage pour la sous-bande, et les bits représentant ces paramètres *GG, GR, IF* et σ suivent le bit d'allocation, avant de passer à la sous-bande suivante. Si le bit d'allocation vaut 0, la sous-bande concernée n'est pas utilisée, et le bit d'allocation à 0 est directement suivi par le champ relatif à la sous-bande suivante.

Après les champs relatifs aux M=8 sous-bandes du signal d'erreur E0, le flux comporte successivement les champs contenant les informations relatives aux $N$=4 bandes élevées de la décomposition du signal d'entrée, considérées dans l'ordre des fréquences croissantes (ces champs sont absents si l'en-tête H indique que la fréquence d'échantillonnage est de 8 kHz seulement). Chacun de ces champs se rapporte au premier étage et éventuellement au second étage du codeur, et commence par un bit d'allocation. Si ce bit d'allocation vaut 0 (pour les deux dernières bandes élevées dans le cas considéré), la bande concernée n'est pas utilisée, et le bit d'allocation à 0 est directement suivi par le champ relatif à la bande suivante (il n'est pas nécessaire de prévoir un bit d'allocation supplémentaire pour le second étage). Si le bit d'allocation vaut 1 (pour les deux premières bandes élevées dans le cas considéré), le flux inclut deux jeux de paramètres QSn de codage du premier étage pour la bande en question, et les bits représentant ces paramètres *GG, GR, IF* et σ suivent le bit d'allocation (il y a deux jeux de NS1=NS2=56 bits parce que les fenêtres de quantification de 60 échantillons sont de 30 ms seulement pour les bandes élevées) ; le flux comporte ensuite le bit d'allocation supplémentaire pour le second étage qui est à son tour suivi, le cas échéant, par les bits représentant les paramètres de codage QEn relatifs au second étage.

On notera que le format illustré par la figure 3 est adapté à des contenus très variés du flux. Il permet la prise en compte de divers noyaux codeurs, et de très nombreuses possibilités dans l'allocation des bits par sous-bandes, desquelles résultent de nombreuses valeurs possibles du débit. Ce flux est dit « éditable » dans la mesure où il permet de récupérer l'information codée morceau par morceau (ici bande par bande). Si par exemple un décodeur limité à la fréquence d'échantillonnage de 8 kHz reçoit le flux représenté sur la figure 3, lequel est destiné a priori à un décodeur fonctionnant à 16 kHz, il pourra néanmoins restituer une version du signal audio codé, simplement en ne tenant pas compte de l'information concernant les bandes élevées.

Avec les valeurs du Tableau I et un noyau codeur G.723 à 6,3 kbit/s, le flux représenté sur la figure 3 code la fenêtre de signal de 60 ms en *A*=1069 bits ordonnés, correspondant à un débit de 17,8 kbit/s. Si le signal d'entrée est échantillonné à 8 kHz seulement, le bit correspondant de l'en-tête est modifié, et l'information concernant les bandes élevées est supprimée (dernière ligne de la figure 3) : la fenêtre est alors de *A*=839 bits ordonnés, correspondant à un débit de 14 kbit/s. Si une réduction supplémentaire du débit est nécessaire, la solution la plus simple est de supprimer la ou les sous-bandes les plus élevées dans la décomposition du signal d'erreur, ce qui entraîne une certaine dégradation de la qualité. Si par exemple le débit doit être ramené à 12,9 kbit/s, on supprime les deux sous-bandes les plus élevées.

Dans un mode de réalisation de l'invention, une réduction du débit résulte d'une suppression portant sur certains bits seulement d'un ou plusieurs indices de quantification vectorielle.

A titre d'exemple, on considère ci-après les indices *IF* de quantification des formes d'onde. On notera toutefois qu'un procédé analogue pourrait être appliqué à tout vecteur de paramètres que le décodeur peut récupérer à partir d'indices de quantification vectorielle pointant dans des dictionnaires prédéterminés. En particulier, on pourrait l'appliquer au vecteur d'excitation stochastique utilisé dans les codeurs de type CELP ou analogue.

Pour chaque segment d'un signal E0m, Sn ou En soumis à la quantification vectorielle, le codeur est capable de produire l'adresse, représentée par un indice *IF* de *Q*=10 bits (exemple du Tableau I), qui désigne dans le dictionnaire de référence de $2^Q$ vecteurs la forme d'onde de 60 échantillons considérée comme optimale au sens de la minimisation de l'erreur de quantification sur un corpus d'apprentissage.

Si seulement *Q-p* bits de cet indice *IF* (1≤*p*<Q) sont transmis au décodeur, celui-ci saura que l'adresse du vecteur sélectionné par le codeur fait partie d'un groupe de $2^{Q-p}$ adresses représentées par les différents indices de *Q* bits qui partagent les *Q-p* bits reçus. Le décodeur pourra alors soit choisir l'un des vecteurs pointés par les $2^{Q-p}$ adresses du groupe, soit en calculer une moyenne pour obtenir la forme d'onde utilisée pour reconstruire le signal.

Plus généralement, les indices transmis de *Q-p* bits sont obtenus par troncature de *p* bits de positions déterminées dans des indices de *Q* bits qui correspondent aux adresses du dictionnaire de référence par une permutation arbitraire (connue de l'émetteur et du récepteur) dans l'intervalle [0, $2^Q$[. Sans restreindre la généralité, on peut étudier le cas où les bits tronqués sont les *p* derniers bits (poids faibles) des indices.

Cette troncature peut être effectuée soit par le codeur à l'origine du flux binaire Φ (il suffit alors que l'unité d'allocation 10 fournisse les nombres de bits pertinents aux modules de codage CSn, CEn ou CE0m), soit par un transcodeur intermédiaire recevant le flux d'origine Φ (ou un flux déjà transcodé) et le transformant en un flux de moindre débit Φ'. La troncature est effectuée pour un ou plusieurs des vecteurs de quantification, voire pour tous. Le codeur ou transcodeur qui l'effectue peut inclure dans le flux binaire, par exemple dans les en-têtes H, des informations décrivant la structure modifiée du flux en termes de nombres de bits des différents indices, à moins que ces informations soit déjà connues du décodeur.

Cette façon de procéder procure une granularité de débit beaucoup plus fine que lorsqu'on joue simplement sur le nombre de sous-bandes prises en considération.

On considère d'abord le cas où ladite permutation dans l'intervalle [0, $2^Q$[ est l'identité, l'indice non tronqué étant égal à l'adresse du vecteur sélectionné par le codeur. Le cas contraire, où une table ou relation de transcodage est utilisée pour rendre compte de la permutation, sera considéré plus loin.

Il est possible d'adopter un ordonnancement adéquat du dictionnaire de référence, pour faire en sorte que, pour une ou plusieurs valeurs de l'entier *p*, les $2^p$ vecteurs désignés par les adresses du groupe soient proches les uns des autres au sens d'un critère de distance, de façon à minimiser l'altération du signal décodé que peut causer la réduction du nombre de bits de l'indice transmis.

Il existe diverses méthodes classiques de construction de dictionnaires de référence pour des processus de quantification vectorielle, déterminés pour modéliser de façon optimale la forme du signal à quantifier. Par exemple, la méthode LBG permet d'obtenir, pour différentes valeurs de l'entier $Q$, des dictionnaires de taille $2^Q$ qui minimisent l'erreur quadratique moyenne lors de la quantification d'un corpus de signaux représentatifs.

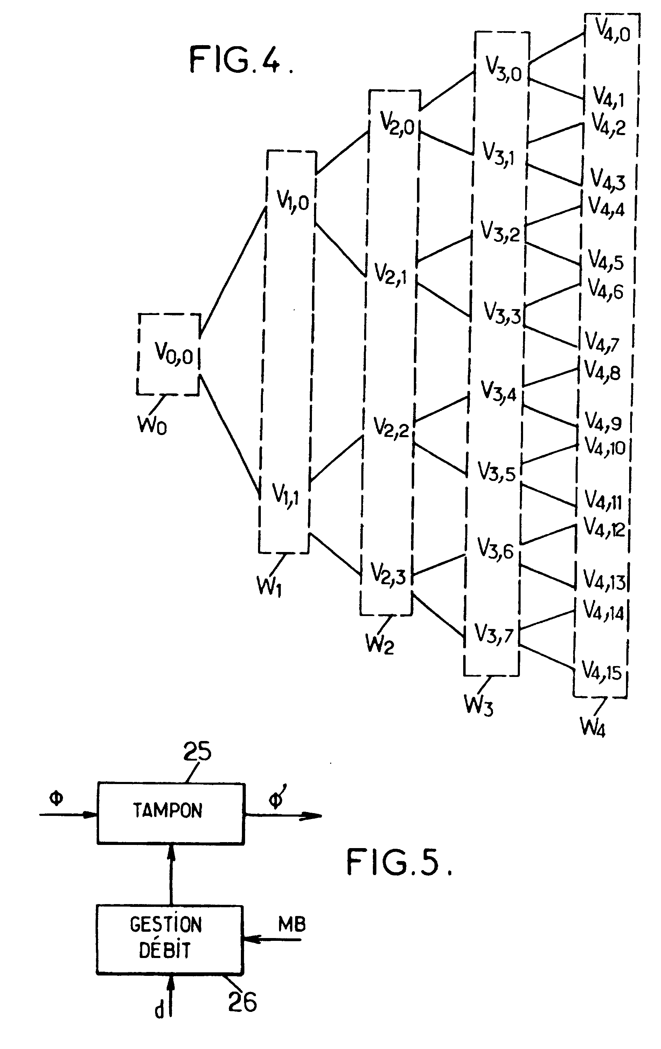

De tels dictionnaires peuvent être générés par une procédure arborescente illustrée par la figure 4. Cette figure montre des dictionnaires $W_i$ composés chacun de $2^i$ vecteurs $V_{ij}$ ($0 \leq j \leq 2^i$) générés itérativement à partir de $i=0$ de façon que leurs combinaisons linéaires recouvrent au mieux l'espace des signaux à quantifier. Pour chaque valeur de $i$, les vecteurs $V_{i+1,2j}$ et $V_{i+1,2j+1}$ sont dérivés du vecteur-père $V_{ij}$ dont ils sont les plus proches. Une fois que Q itérations ont été effectuées, on adopte le dictionnaire $W_Q$ comme dictionnaire de référence et les index $j$ des vecteurs $V_{Qj}$ comme adresses. Cette construction connue de dictionnaires est généralement utilisée dans le but d'accélérer la recherche du vecteur optimal, en procédant à la recherche de la racine vers les ramifications de l'arbre, ce qui nécessite que le codeur mémorise une partie au moins des dictionnaires intermédiaires $W_i$ ($i<Q$) en plus du dictionnaire $W_Q$. Dans la présente application, on utilise cette construction afin de s'assurer que, pour toute valeur de $p$, les $2^p$ vecteurs désignés par les adresses d'un groupe de $2^p$ adresses partageant leurs $Q$-$p$ bits de poids les plus forts soient relativement proches les uns des autres, ce qui minimise les distorsions provoquées par la transmission d'un nombre restreint de bits de l'indice.

Le module de décodage DSn, DEn ou DE0m recevant les $Q$-$p$ bits de l'indice tronqué peut les compléter par $p$ bits de valeurs arbitraires à la place des $p$ bits manquants pour former l'adresse d'accès dans le dictionnaire de référence.

Si le spectre du signal quantifié est blanc, ce qui est le cas en bonne approximation pour les signaux d'erreur résiduelle E0m et En, il a alors une chance sur $2^p$ d'utiliser le vecteur optimal. Pour limiter les biais, il est préférable de tirer au hasard les $p$ bits ajoutés à l'indice reçu.

Dans certains cas, les $p$ bits ajoutés à l'indice reçu par le décodeur peuvent être de valeurs prédéterminées, par exemple 00... 0. Cela peut être le cas si le module de quantification vectorielle CSn, CEn ou CE0m du codeur sélectionne le vecteur de paramètres de codage dans un sous-dictionnaire de $2^{Q-p}$ vecteurs inclus dans le dictionnaire de référence, contenant seulement les vecteurs dont l'adresse se termine par $p$ bits à zéro. Les $Q$-$p$ bits de l'indice transmis, complétés par $p$ bits de poids faibles à zéro représentent alors l'adresse du vecteur sélectionné dans le dictionnaire de référence.

Une autre possibilité pour le module de décodage DSn, DEn ou DE0m du décodeur, recevant un indice de $Q$-$p$ bits seulement, est de calculer pour former son signal de sortie une moyenne des 2P vecteurs dont les adresses commencent par ces $Q$-$p$ bits.

Si la statistique du signal quantifié est uniforme, il y a intérêt à ce que cette moyenne soit uniforme, c'est-à-dire non pondérée.

Si la statistique du signal quantifié n'est pas uniforme, ce qui peut être le cas par exemple pour les signaux S1-SN dans le codeur de la figure 1, une pondération sera de préférence utilisée dans le calcul de moyenne par le décodeur. Dans ce cas, on utilise préalablement une base de données représentative de la statistique des signaux traités pour associer à chaque vecteur du dictionnaire un coefficient représentant sa probabilité d'occurrence a priori. Ces coefficients étant fixés, on peut ensuite s'en servir pour pondérer les moyennes de façon à limiter les distorsions dues à la suppression de certains bits du flux.

Il est également possible que le décodeur adopte, pour obtenir la forme d'onde, une méthode qui tienne compte d'une information sur le signal codé.

Cette information peut notamment se rapporter au caractère stationnaire ou non stationnaire du signal. Elle peut soit être transmise par le codeur dans le flux binaire, par exemple dans l'en-tête H, soit être obtenue par le décodeur par une analyse a posteriori du signal décodé. Des méthodes d'analyse du caractère stationnaire du signal, par exemple de détection voisé/non voisé, sont bien connues dans le domaine du codage de parole.

On peut établir a priori plusieurs tables de coefficients pondérateurs associés aux vecteurs du dictionnaire de référence, par exemple une table représentative de la statistique des signaux de type stationnaire, et une autre table représentative de la statistique des signaux de type non stationnaire, et choisir dynamiquement la table employée pour récupérer les coefficients pondérateurs de la moyenne sur la base de l'information sur le caractère stationnaire du signal.

Dans le cas où un vecteur est simplement sélectionné dans le groupe de 2P vecteurs, la sélection peut également être différente selon une information sur le signal telle qu'un degré de stationnarité.

Une autre analyse que peut effectuer le module de décodage dans le cadre de la récupération du vecteur de paramètres de codage repose sur une prédiction de ce vecteur. On peut ainsi soumettre la séquence des vecteurs, récupérés par le module de décodage concerné pour les fenêtres temporelles successives, à une prédiction linéaire afin d'obtenir un vecteur prédit pour la fenêtre courante. Deux possibilités sont alors offertes : retenir finalement celui des $2^p$ vecteurs du groupe dont les adresses commencent par les $Q$-$p$ bits de l'indice reçu qui présente une similitude maximale, ou une distance minimale, avec le vecteur prédit ; ou tenir compte de ce vecteur prédit dans l'affectation des coefficients pondérateurs si un calcul de moyenne pondéré est effectué, un poids maximal étant alors affecté à celui des $2^p$ vecteurs qui présente une similitude maximale avec le vecteur prédit.

Les différentes méthodes qui ont été décrites ci-dessus pour l'obtention du vecteur à partir de l'indice incomplet peuvent coexister dans le même décodeur, et être sélectionnées sur la base d'informations contenues dans le flux ou transmises dans une signalisation préalable à la communication. D'autre part, chaque vecteur étant formé par un module de décodage respectif DSn, DEn ou DE0m, on pourra prévoir que des méthodes différentes soient appliquées par ces modules pour l'obtention du vecteur à partir de l'indice incomplet. D'ailleurs, les différents modules de codage et de décodage associés pourraient utiliser des dictionnaires de référence différents.

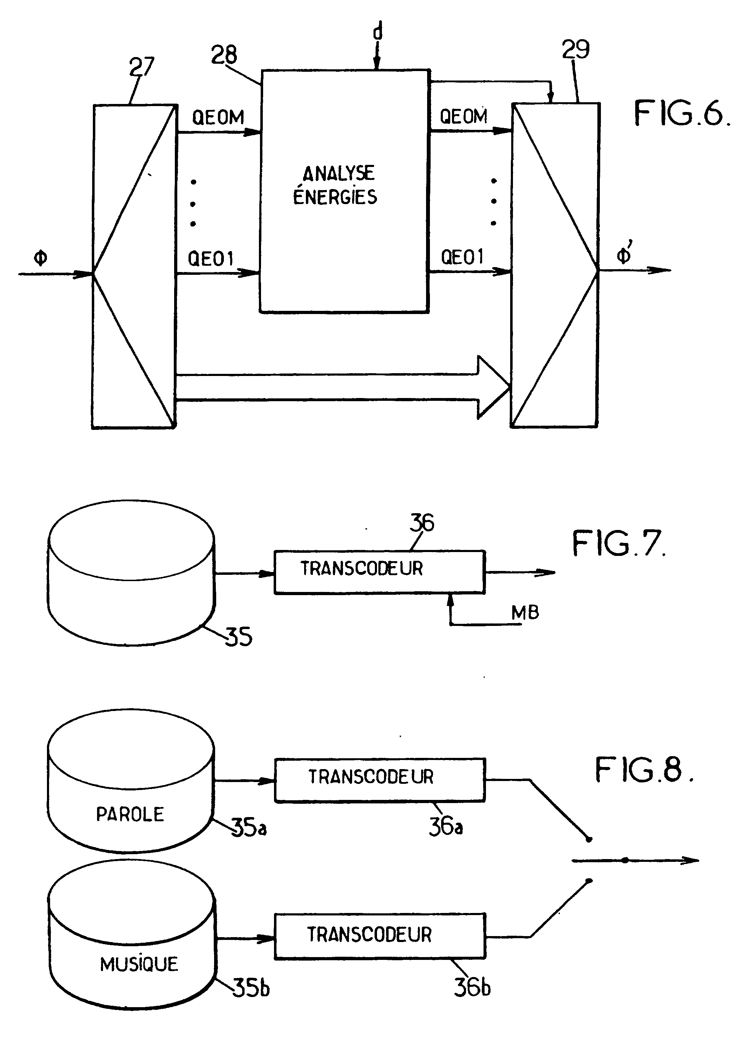

Les figures 5 et 6 sont des schémas synoptiques de transcodeurs pouvant effectuer la suppression de certains bits d'un ou plusieurs indices.

Il est à noter que le flux d'entrée Φ du transcodeur peut avoir déjà fait l'objet d'une suppression de bits de poids les plus faibles de certains des indices de quantification vectorielle, soit par le codeur à l'origine du flux, soit par un autre transcodeur intermédiaire. Un indice de $Q$-$q$ bits du flux d'entrée Φ (avec $q{\geq}0$ dans le cas général) est ainsi réduit à un indice de $Q$-$p$ bits, avec $p>q,$ dans le flux de sortie Φ' du transcodeur.

Dans l'architecture de la figure 5, le flux binaire d'entrée Φ est écrit dans une mémoire tampon 25. Des parties en sont ensuite lues dans la mémoire 25 pour former le flux de sortie Φ'. Le contrôle des bits lus et supprimés est effectué par une unité de gestion de débit 26 recevant une valeur de débit de sortie $d$ à respecter. En fonction du débit $d$, l'unité 26 détermine quels bits doivent être supprimés. A titre d'exemple, pour des valeurs de $d$ décroissantes, elle peut commencer par supprimer un bit par module de codage, en commençant, selon la composition du flux d'entrée Φ, par les derniers étages du codeur et par les sous-bandes les plus élevées. Bien entendu d'autres stratégies de choix des bits supprimés seraient applicables. Comme le montre la figure 5, le transcodeur pourrait aussi recevoir des messages MB de la part du récepteur afin d'en tenir compte dans la construction du flux de sortie Φ'.

Dans l'architecture de la figure 6, le transcodeur comporte un démultiplexeur d'entrée 27 qui reçoit le flux d'entrée Φ et sépare certains indices de quantification (les indices QE0m seulement dans l'exemple dessiné) du reste du flux. Une unité d'analyse énergétique 28 examine les indices QE0m et en supprime certains bits avant de fournir les indices tronqués à un multiplexeur de sortie 29 qui, avec les autres éléments du flux d'entrée Φ, forme le flux de sortie Φ'.

Pour chaque jeu d'indices QE0m=$\{GG$, $GR$, $IF,$ $\sigma\}$, l'unité 28 estime l'énergie du signal quantifié, mesurée par les indices de gains lorsque les formes d'onde sont normalisées. En fonction du débit de sortie $d$ requis, elle supprime des bits des indices de quantification $IF$ des formes d'onde, en commençant par ceux appartenant aux jeux d'indices pour lesquels les énergies estimées sont les plus faibles. On sélectionne ainsi, dans l'ensemble de composantes spectrales, une ou plusieurs composantes dont les énergies sont minimales, afin de remplacer l'indice $IF$ du jeu d'indices de quantification associé à chaque composante sélectionnée par un indice tronqué.

On note que le codeur pourrait dès l'origine adopter une stratégie semblable.

Un décodeur recevant le flux de sortie Φ' ainsi construit estime de la même façon les énergies sur la base des indices de gain (qui ne sont pas modifiés), ce qui lui permet d'identifier les sous-bandes pour lesquelles des bits des indices $IF$ ont été supprimés. Le démultiplexeur d'entrée 15 de ce décodeur est associé à une unité d'analyse énergétique du même genre que l'unité 28 de la figure 6. L'unité d'analyse énergétique du décodeur, qui peut faire partie de l'unité d'allocation de bits dans le schéma de la figure 2, reçoit les indices de gains $GG$, $GR$, $\sigma$ pour les différentes composantes quantifiées afin d'identifier les composantes les moins énergétiques et d'affecter un nombre réduit de bits à leurs indices de quantification de forme $IF$. Elle commande le démultiplexeur d'entrée 15 et les modules de décodage DSn, DEn, DE0m pour que les bits des indices soient convenablement distribués. Pour que le décodeur puisse correctement identifier les indices reçus, il convient de modifier l'ordonnancement des bits dans le flux par rapport à la structure représentée sur la figure 3, par exemple de façon à placer les indices de gain $GG$, $GR$, $\sigma$ avant les indices de forme $IF$.

Cette façon d'opérer le codage/transcodage et le décodage oriente les erreurs vers les portions les moins énergétiques du signal, ce qui limite la perception des distorsions.

Le transcodeur de la figure 5 ou 6 peut notamment être placé à un noeud d'un réseau de télécommunications utilisé pour transmettre le flux binaire. Le flux binaire d'entrée Φ est alors reçu sur une liaison du réseau, et le flux binaire de sortie Φ' est réémis sur une autre liaison du même réseau, ou sur une liaison d'un réseau différent dans le cas d'une passerelle. Le réseau en question peut notamment être un réseau à commutation de paquets, tel qu'un réseau Internet ou ATM. Dans un tel réseau, il est souhaitable de pouvoir adapter dynamiquement, et de préférence finement, le débit de transmission pour éviter des retards de transmission dus à un trafic encombré, retards qui ne sont généralement pas admissibles pour des signaux audio.

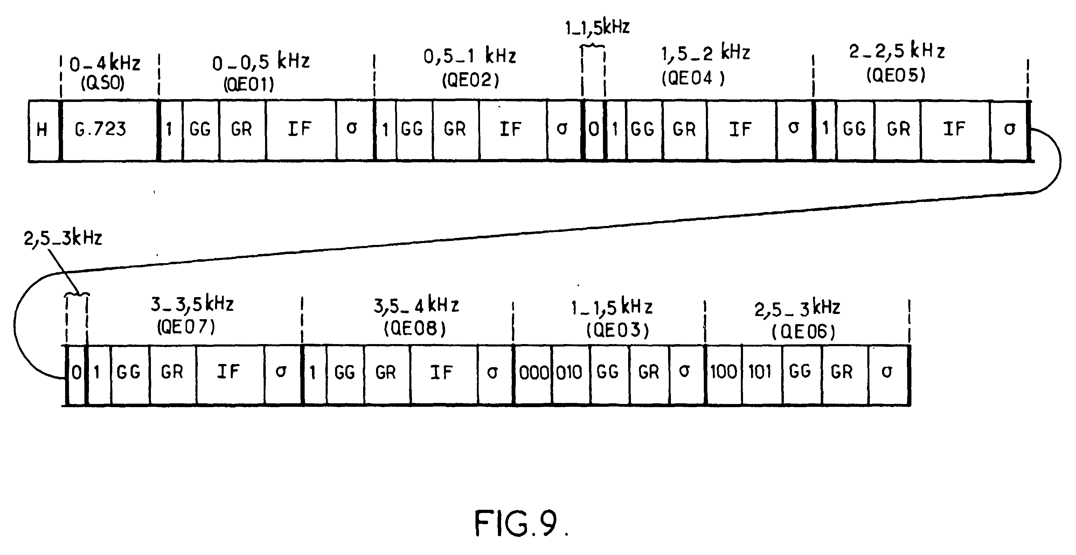

Dans certaines applications, le transcodeur peut encore être situé à l'endroit d'où provient le signal codé. Il peut notamment être associé à un serveur audio, comme schématisé sur la figure 7 ou 8.

Dans l'exemple de la figure 7, une mémoire 35 du serveur audio contient un certain nombre de séquences de signal préalablement codées au débit maximal du processus de codage (dans l'exemple considéré plus haut : NE01= ... =NEOM=NS1= ... =NSN=NE1= ...... =NEN=56).

Lorsque le serveur doit produire une séquence donnée à destination d'un décodeur, ayant par exemple fait connaître dans un message MB ses caractéristiques pertinentes (et/ou une indication des sous-bandes pour lesquelles des bits peuvent être supprimés), le transcodeur 36 obtient le flux à plein débit lu dans la mémoire 35 et supprime, pour effectuer la transmission selon un débit plus faible, des bits de quantification déterminés comme décrit précédemment.

Les bits supprimés peuvent également être choisis en fonction de l'origine du signal codé. La figure 8 montre ainsi un autre serveur audio dans lequel des transcodeurs mettent en oeuvre l'invention sans nécessairement analyser les flux transmis ou recevoir de messages MB issus d'un décodeur. Dans l'exemple de la figure 8, la mémoire du serveur est divisée en deux zones, l'une 35a dans laquelle on a enregistré les séquences codées à plein débit correspondant à des signaux de parole, et l'autre 35b dans laquelle on a enregistré les séquences codées à plein débit correspondant à des signaux de musique. Chaque séquence lue dans la zone 35a est soumise à un transcodeur 36a qui réduit son débit lorsque c'est nécessaire, en privilégiant la suppression de bits relatifs aux sous-bandes de décomposition du signal d'erreur E0. A l'inverse, les séquences lues dans la zone 35b sont soumises à un transcodeur 36b qui, lorsque c'est nécessaire, supprime des bits de quantification préférentiellement dans les bandes élevées afin de privilégier la correction des distorsions que le noyau codeur a pu introduire dans la bande de base.

Le procédé de codage ou de transcodage, selon lequel on transmet un nombre de bits $Q\text{-}p$ plus faible que le nombre de bits $Q$ des adresses des vecteurs dans le dictionnaire de référence, peut également être appliqué au noyau codeur, ou plus généralement à tout codeur de forme d'onde faisant appel à un dictionnaire par exemple CELP ou autre. Ces codeurs sont développés dans le cadre d'applications dans lesquelles la présente invention n'est normalement pas prise en compte. Cela conduit à des dictionnaires de référence dont l'ordonnancement ne remplit pas a priori la condition de distances réduites entre vecteurs dont les adresses partagent leurs bits de poids les plus forts.

Partant d'un tel dictionnaire de référence de taille $2^Q$, on peut ordonner les vecteurs qui le composent de façon à leur associer respectivement des indices de $Q$ bits en plus de leurs adresses dans le dictionnaire, conduisant à vérifier un critère de distances minimales entre les vecteurs appartenant à chaque groupe de $2^p$ vecteurs du dictionnaire dont les indices de $Q$ bits respectifs ne diffèrent que par les $p$ bits de poids les plus faibles. Cet ordonnancement peut être réalisé pour une seule ou pour plusieurs valeurs de l'entier $p$. Il conduit à la définition d'une ou plusieurs relations ou tables de transcodage déterminant un indice de $Q$ bits pour représenter l'adresse sur $Q$ bits de chaque vecteur du dictionnaire. Cette table est telle que les vecteurs de chaque groupe de $2^p$ vecteurs, dont les adresses sont représentées par $2^p$ indices de $Q$ bits ne différant les uns des autres que par leurs $p$ bits de poids les plus faibles, soient relativement proches les uns des autres.

Les considérations ci-dessus, relatives à la réduction du nombre de bits d'un ou plusieurs indices de quantification, s'appliquent à une structure de codec dont le principe est illustré par les figures 1 et 2, et de façon semblable à toute structure de codec générant un ou plusieurs paramètres quantifiés vectoriellement. Si on considère les seuls codeurs audio, on peut citer les systèmes dans lesquels des gains, des formes d'onde et/ou des composantes fréquentielles du signal sont quantifiés vectoriellement. Le processus est donc applicable aux codecs CELP et dérivés, MP-LPC (« Multi Pulse - Linear Prediction Coding »), en sous-bandes, MBE (« Multi Band Excited »), etc. Il l'est également pour le codage d'autres signaux, notamment vidéo.

Dans d'autres réalisations du transcodage, des jeux d'indices de quantification relatifs à une ou plusieurs composantes spectrales sont complètement supprimés, mais pas nécessairement ceux relatifs aux sous-bandes les plus élevées. On peut ainsi privilégier la suppression de telle ou telle sous-bande selon l'origine du signal et/ou les capacités du décodeur.

La figure 9 illustre une autre façon judicieuse de réduire le débit du codec décrit précédemment. Dans cet exemple, le flux ne comporte pas d'indices $IF$ de quantification de forme d'onde pour les sous-bandes $m$=3 et $m$=6. Il comporte néanmoins des indices $GG, GR$ et σ de quantification des gains pour ces deux sous-bandes $m$, dites bandes receveuses, et le décodeur reçoit instruction de recopier les indices de quantification des formes d'onde correspondantes depuis d'autres sous-bandes $m'$, dites bandes donneuses, (respectivement $m'$=1 et $m'$=5). Dans le flux construit selon la même méthode que celui de la figure 3, les bits d'allocation des deux bandes receveuses $m$=3 et $m$=6 sont mis à 0, et l'information concernant la dernière sous-bande $M$=8 est suivie par deux champs permettant au décodeur de reconstruire les composantes relatives aux deux bandes receveuses.

Il convient d'inclure dans l'en-tête H du flux une information (par exemple 2 bits) indiquant le nombre de sous-bandes faisant l'objet de ce processus de recopie d'indices. Le champ concernant une telle sous-bande receveuse m comporte, outre les indices $GG, GR$ et σ de quantification des gains, deux index de sous-bande (codés sur trois bits dans le cas considéré où $M$=8). Le premier de ces deux index désigne le numéro $m'$ de la sous-bande donneuse dont les indices de forme d'onde $IF$ seront recopiés ; c'est par exemple l'expression binaire de $m'$-1. Le second de ces deux index désigne de la même façon le numéro $m$ de la sous-bande receveuse en question.

Dans l'exemple particulier de la figure 9, il a été déterminé deux paires de sous-bandes donneuse/receveuse, à savoir la paire $m'$=1, $m$=3 d'une part, et la paire $m'$=5, $m$=6 d'autre part. Pour la sous-bande donneuse $m'$ de chaque paire, le décodeur lit l'intégralité des indices de quantification directement dans le flux binaire, tandis que, pour la sous-bande receveuse $m$, le décodeur lit directement les seuls indices $GG$, $GR$, σ de quantification des gains, et recopie les indices $IF$ de quantification des formes d'onde à partir de ceux lus pour la sous-bande $m'$ donneuse de la paire. Ceci est réalisé simplement par une commande appropriée du démultiplexeur 15 de la figure 2.

La détermination de ces paires de sous-bandes $m'$, $m$ peut être faite soit par le codeur à l'origine du flux soit par un transcodeur intermédiaire. Elle résulte d'une analyse des similitudes entre les composantes E0m du signal d'erreur E0, cette analyse pouvant être effectuée soit directement sur ces composantes E0m, soit sur leur forme quantifiée.

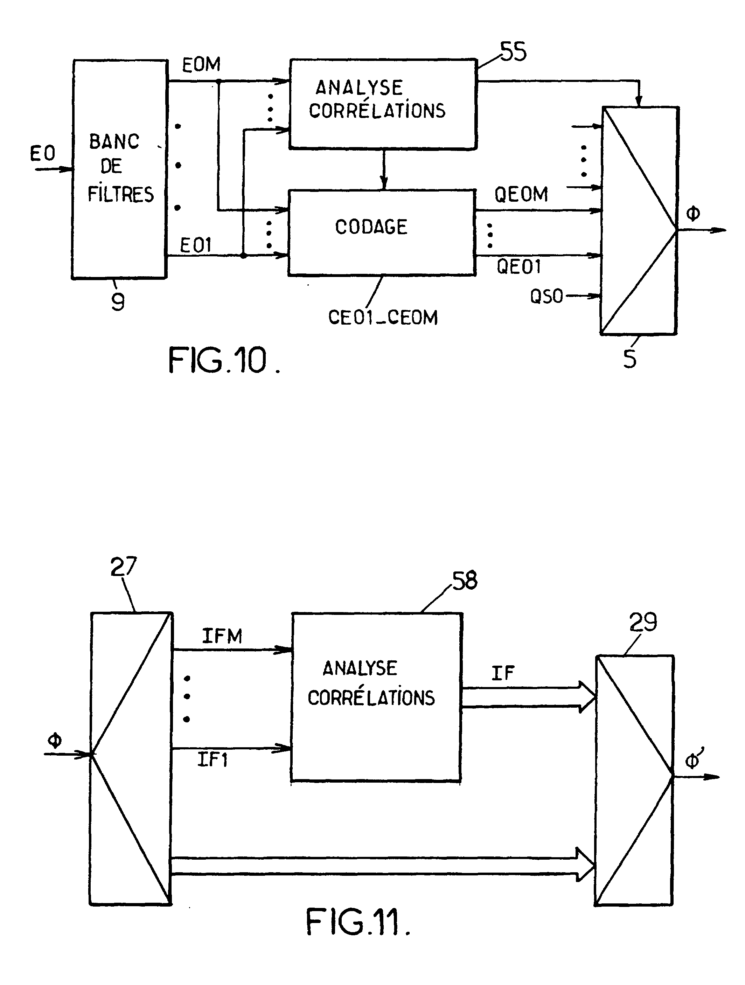

La figure 10 illustre schématiquement comment adapter le codeur de la figure 1 pour mettre en oeuvre le processus de recopie des indices de quantification de forme d'onde. Les composantes en sous-bandes E0m du signal d'erreur E0, produites par le banc de filtres 9, sont analysées par un module 55 qui calcule les corrélations entre elles.

Pour la corrélation entre deux composantes E0m et E0m', le module 55 calcule par exemple le cosinus, ou le cosinus carré, de l'angle entre les deux vecteurs formés par les échantillons numériques successifs de ces deux composantes. Ce cosinus a pour expression :

$$\cos(\text{E0m, E0m'}) = \frac{\text{E0m . E0m'}}{\|\text{E0m}\| \times \|\text{E0m'}\|} \tag{1}$$

où

$$\text{E0m}.\text{E0m'} = \sum_{t=1}^{T} \text{E0m}(t) \times \text{E0m'}(t)$$

(produit scalaire),

$$\|\text{x}\| = \sqrt{\text{x.x}},$$

et $E0m(t)$ désigne le $t$-ième échantillon de la composante E0m, le calcul étant fait sur la fenêtre de $T$=60 échantillons. Les $M(M$-1)/2 corrélations sont rangées dans une table triée dans l'ordre des corrélations décroissantes. Le module d'analyse 55 choisit alors les paires (deux paires dans l'exemple considéré) pour lesquelles les corrélations sont maximales. Pour limiter les distorsions, on fait en sorte qu'une sous-bande qui est receveuse dans une paire sélectionnée ne figure dans aucune des autres paires sélectionnées.

A partir des paires de sous-bandes sélectionnées $m'$, $m$, le module 55 commande le module de codage CE0m pour lui imposer d'adopter, pour chacun des segments de la fenêtre, les formes d'onde respectivement sélectionnées par le module CE0m'. Ce module CE0m détermine alors les indices de gain appropriés $GG$, $GR$, σ de façon à minimiser l'erreur de quantification. Le module 55 commande également le multiplexeur de sortie 5 pour qu'il construise le flux Φ de la manière illustrée par la figure 9.

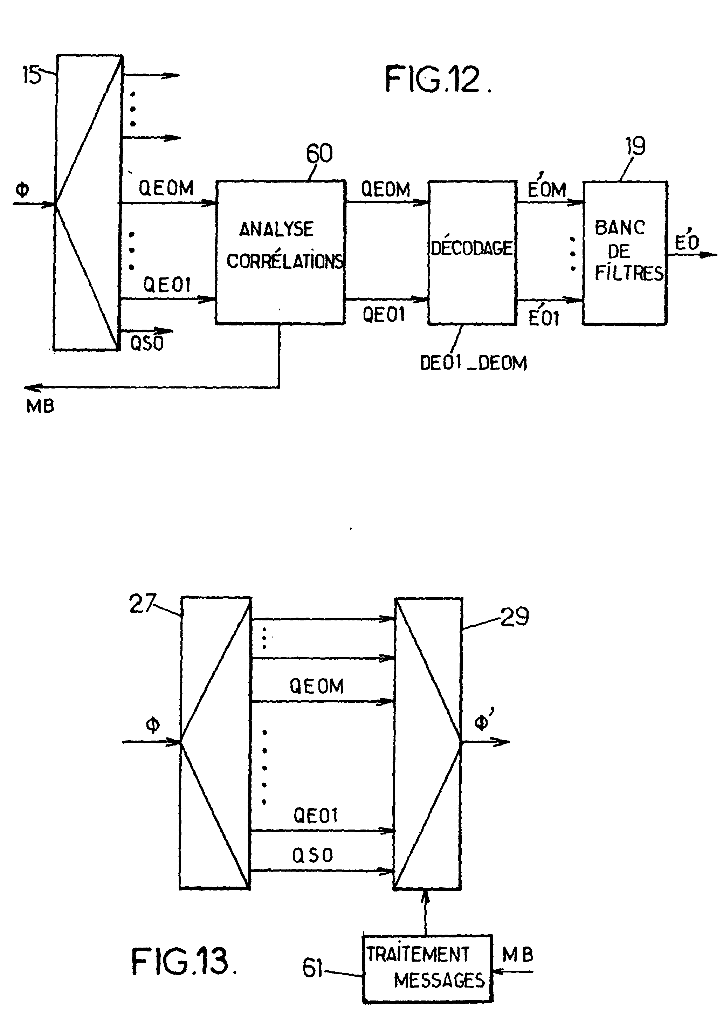

L'analyse des corrélations peut porter sur les formes d'onde quantifiées plutôt que sur les composantes E0m elles-mêmes. Cette façon de procéder peut être adoptée au niveau du codeur, mais aussi au niveau d'un transcodeur intermédiaire comme l'illustre la figure 11. Les formes d'onde stockées dans les dictionnaires des modules de codage CE0m étant des formes d'onde normalisées, le fait d'analyser les similitudes entre les formes d'onde quantifiées permet de se dispenser des calculs nécessaires à normaliser les corrélations (dénominateur inutile dans l'expression (1) ci-dessus).

Dans le transcodeur de la figure 11, le démultiplexeur 27 extrait du flux binaire d'entrée Φ les indices de quantification de formes d'onde $IF1$-$IFM$ relatifs aux $M$=8 sous-bandes de la décomposition du signal d'erreur E0 et aux différents segments de la fenêtre, et les fournit à un module 58 d'analyse des corrélations. Ce module 58 récupère dans le dictionnaire de quantification les valeurs des formes d'onde pertinentes pour la fenêtre concernée, et procède à une analyse semblable à celle du module 55 précédemment décrit en référence à la figure 10. Dans cette analyse, les composantes E0m issues du banc de filtres 9, qui ne sont pas disponibles, sont remplacées par les formes d'onde relatives aux quatre segments. Les indices de forme d'onde conservés sont fournis au multiplexeur 29 formant le flux binaire de sortie Φ' de débit réduit, de même que des paramètres de contrôle identifiant les paires $m'$, $m$ sélectionnées et servant à mettre en forme le flux Φ' de la manière décrite en référence à la figure 9.

Le flux représenté sur la figure 9, qui peut être produit par le codeur de la figure 10 ou par le transcodeur de la figure 11 comporte, avec les valeurs numériques précédemment considérées, 773 bits par fenêtre de 60 ms, soit un débit de 12,9 kbit/s. Cette réduction du débit est réalisée sans sacrifier a priori deux sous-bandes, mais au contraire en exploitant les corrélations qui peuvent exister entre les différentes sous-bandes. La perte de qualité, qu'occasionne inévitablement la réduction du débit, est donc minimisée.

Dans les exemples décrits en référence aux figures 10 et 11, c'est une analyse de corrélations qui sert à décider quelles sous-bandes sont sélectionnées pour le processus de recopie d'indices. Dans la pratique, d'autres critères de similitude entre vecteurs pourront aussi être utilisés, tels que par exemple des critères de distance minimale.

Dans les exemples décrits ci-dessus, le processus de recopie d'indices est exécuté par le décodeur sur la base d'informations lues dans le flux binaire d'entrée du décodeur (les bits de l'en-tête indiquant le nombre de sous-bandes concernées, les indices des sous-bandes donneuses et receveuses). Dans d'autres modes de réalisation, le processus de recopie d'indices est mis en oeuvre sans que le flux d'entrée porte une telle information. Cela pourra notamment être le cas lorsque le décodeur reçoit un flux d'entrée $\Phi$ de débit variable. Dans ce cas, le processus comporte deux phases :

- une première phase dans laquelle le débit du flux binaire est relativement important (il inclut par exemple les $M$=8 composantes en sous-bandes du signal d'erreur). Dans cette première phase, un module 60 du décodeur (voir figure 12) reçoit les indices de quantification QE0m relatifs aux différentes sous-bandes, et analyse les similitudes entre les différentes composantes des sous-bandes de manière semblable au module d'analyse 58 du transcodeur de la figure 11. Dans cette première phase, le module 60 ne modifie pas les paramètres QE0m reçus. Il les délivre respectivement aux modules de décodage DE0m qui forment les composantes E'0m utilisées pour reconstruire l'estimation E'0 du signal d'erreur ;

- une seconde phase dans laquelle le débit du flux $\Phi$ est réduit à une valeur inférieure, par suppression d'une ou plusieurs des sous-bandes les plus élevées du signal d'erreur. Une telle suppression peut par exemple s'être produite dans le réseau de transmission du flux binaire, pour faciliter l'acheminement de ce flux en présence d'un trafic encombré. Dans cette seconde phase, le module 60 exploite les similitudes apprises dans la première phase pour procéder à une recopie d'indices. Si, par exemple, les indices de quantification relatifs à la sous-bande $M$=8 manquent, le module 60 recherche laquelle des composantes des autres sous-bandes présentait la plus grande similitude avec cette $M$-ième composante dans la première phase, et les indices de quantification des formes d'onde seront recopiées à partir du jeu d'indices QE0m reçu pour cette sous-bande. Les indices de quantification des gains peuvent également être recopiés selon le même processus, et éventuellement multipliés par un coefficient également appris lors de la première phase.

Si le décodeur est capable d'échanger des messages avec le transcodeur qui effectue la réduction du débit, on peut encore prévoir que, lorsqu'une réduction du débit devient nécessaire, le module d'analyse 60 du décodeur identifie dans un message MB retourné au transcodeur quelles sont les sous-bandes pour lesquelles tout ou partie des indices peuvent être supprimés préférentiellement. Le transcodeur peut alors supprimer les indices de forme d'onde relatifs à ces sous-bandes. Dans la deuxième phase où le débit est plus faible, le module 60 du décodeur recopiera ces indices à partir des sous-bandes pour lesquelles il aura relevé les corrélations maximales dans la première phase. Si les indices de quantification des gains sont également supprimés par le transcodeur, le module 60 du décodeur pourra les réévaluer comme décrit précédemment.

La figure 13 est un schéma synoptique d'un transcodeur coopérant avec ce type de décodeur. Ce transcodeur comprend une unité 61 de traitement des messages MB reçus du décodeur. L'unité 61 commande le multiplexeur de sortie 29 du transcodeur pour qu'il supprime, dans le flux de sortie $\Phi'$, certains des indices de quantification extraits du flux d'entrée $\Phi$ par le démultiplexeur 27, et qu'il mette en forme le flux de sortie, par exemple de la manière décrite en référence à la figure 9. L'analyse directe du flux d'entrée (figure 11) est donc remplacée par le traitement de messages résultant d'une analyse effectuée en aval par le décodeur. Les indices supprimés seront typiquement les indices de forme d'onde pour une ou plusieurs des sous-bandes. Ils pourront éventuellement inclure aussi certains indices de quantification de gain, par exemple les indices $GR$ de quantification des gains résiduels.

Dans d'autres formes de réalisation, les messages MB retournés par le décodeur ne contiennent pas les résultats d'une analyse telle que celle effectuée par le module 60 du décodeur de la figure 12, mais plutôt de l'information indiquant des caractéristiques du décodeur. Par exemple, si le décodeur est destiné à décoder seulement des signaux de parole, il peut en informer le transcodeur dans un message MB, afin que celui-ci élimine préférentiellement les indices de quantification se rapportant aux sous-bandes du signal d'erreur E0 (ou certains seulement de ces indices, ou encore certains bits seulement de ces indices) plutôt que ceux se rapportant aux bandes élevées de la décomposition du signal d'entrée S. Dans ce cas, le décodeur contrôle le transcodeur afin qu'il n'élimine pas simplement les bits figurant en dernier dans le flux, mais de préférence des bits plus appropriés se trouvant dans des positions intermédiaires.

Le signal de parole étant codé à bas débit de façon fidèle par le noyau codeur 8, l'amélioration apportée par le codage des composantes de bandes plus élevées est beaucoup plus significative que celle apportée par le codage des composantes du signal d'erreur, de sorte que cette façon de procéder conduit à un transcodage optimal du signal de parole compte tenu des contraintes de débit.

Un autre mode de réalisation du procédé de transcodage consiste à analyser le flux d'entrée Φ, non pas pour rechercher les similitudes entre sous-bandes comme décrit plus haut en référence à la figure 11, mais pour déterminer quelles sont les sous-bandes dans lesquelles le signal codé (par exemple le signal d'erreur E0) est le moins énergétique. Dans ce cas, la suppression des indices de quantification est effectuée préférentiellement dans ces sous-bandes les moins énergétiques. Le transcodeur peut construire le flux de sortie Φ' en supprimant une partie seulement des indices pour une sous-bande peu énergétique. Il peut également supprimer la totalité des indices pour une ou plusieurs sous-bandes d'énergie très basse.

Une façon simple de déterminer quelles sont les sous-bandes les moins énergétiques consiste à examiner les indices de quantification des gains. Ces gains sont indicatifs de l'énergie puisque les formes d'onde du dictionnaire sont normalisées. Le transcodeur détermine, parmi les $M$=8 sous-bandes, celle(s) dont les gains sont les plus faibles sur les quatre segments, et privilégie la suppression des indices pour cette sous-bande. Pour cette détermination, le transcodeur, dont la structure est conforme à la figure 6, peut n'examiner que les indices *GG* de quantification du gain moyen sur la fenêtre.

Dans les différents modes de réalisation du procédé de transcodage décrits ci-dessus, on supprime des indices du flux d'entrée Φ, ou certains bits seulement de ces indices, pour construire un flux de sortie Φ' de débit plus faible, le choix des bits supprimés n'étant pas arbitraire (les bits apparaissant en dernier dans chaque fenêtre), mais dicté par des règles permettant de minimiser la dégradation de la qualité du codage. Grâce à ces dispositions, on obtient une échelonnabilité fine du flux binaire, tout en limitant la dégradation que toute réduction de qualité entraîne nécessairement, ainsi que le supplément de complexité que cela implique dans les entités mettant en oeuvre le transcodage.

**Revendications**

**1.** Procédé de décodage d'un flux binaire (Φ,Φ') représentatif d'un signal audio (S), dans lequel on calcule au moins un ensemble de composantes spectrales à partir d'indices de quantification inclus dans le flux binaire, et on combine les composantes spectrales dudit ensemble lors d'une construction d'une version décodée (S") du signal audio, chaque composante (E'0m ; S'n ; E'n) de l'ensemble étant associée à un jeu d'indices de quantification (QE0m ; QSn ; QEn) utilisés dans le calcul de cette composante, dans lequel le flux binaire (Φ) inclut une information d'identification d'au moins une paire de composantes spectrales, chaque paire identifiée comportant une première composante et une seconde composante, et dans lequel on associe la seconde composante spectrale d'au moins une paire identifiée à un jeu d'indices de quantification dont certains au moins des indices sont copiés depuis un jeu d'indices lu dans le flux binaire et associé à la première composante spectrale de ladite paire identifiée.

**2.** Procédé de décodage selon la revendication 1, dans lequel les composantes spectrales de l'ensemble sont traitées par segments temporels successifs, chaque segment temporel d'une composante spectrale étant obtenu par le produit d'une forme d'onde appartenant à un dictionnaire et d'un gain, ladite forme d'onde et ledit gain étant identifiés par des indices de quantification respectifs *(IF, GG, GR, σ)* appartenant au jeu d'indices associé, et dans lequel les indices de quantification copiés pour une composante spectrale comprennent les indices de quantification de formes d'onde *(IF)* relatifs à cette composante spectrale.

**3.** Procédé de décodage selon la revendication 2, dans lequel au moins une partie des indices de quantification des gains appartenant au jeu d'indices associé à la seconde composante de chaque paire identifiée sont lus dans le flux binaire (Φ) de manière indépendante de la lecture du jeu d'indices associé à la première composante de ladite paire.

**4.** Procédé de décodage d'un flux binaire (Φ,Φ') représentatif d'un signal audio (S), dans lequel on calcule au moins un ensemble de composantes spectrales à partir d'indices de quantification inclus dans le flux binaire, et on combine les composantes spectrales dudit ensemble lors d'une construction d'une version décodée (S") du signal audio, chaque composante (E'0m ; S'n ; E'n) de l'ensemble étant associée à un jeu d'indices de quantification (QEOm ; QSn ; Qen) utilisés dans le calcul de cette composant, dans lequel le flux binaire (φ, φ) a un débit variable, le procédé comprenant une première phase dans laquelle le flux binaire (φ) inclut des jeux d'indices de quantification respectifs pour calculer un premier ensemble de composantes spectrales et dans laquelle on analyse des similitudes entre les composantes spectrales du premier ensemble, et une seconde phase dans laquelle le flux binaire (φ'), de débit plus faible que dans la première phase, inclut des jeux d'indices de quantification respectifs pour calculer une partie seulement des composantes spectrales du premier ensemble et dans laquelle on calcule au moins une composante spectrale du premier ensemble n'appartenant pas à ladite partie à partir d'indices au moins partiellement copiés depuis un jeu d'indices de quantification lu dans le flux binaire (φ') et associé à une composante appartenant à ladite partie, pour laquelle une similitude maximale a été déterminée dans la première phase.

5. Procédé de décodage selon la revendication 4, dans lequel les composantes spectrales de l'ensemble sont traitées par segments temporels successifs, chaque segment temporel d'une composante spectrale étant obtenu par le produit d'une forme d'onde appartenant à un dictionnaire et d'un gain, ladite forme d'onde et ledit gain étant identifiés par des indices de quantification respectifs *(IF, GG, GR, GR, σ)* appartenant au jeu d'indices associé, et dans lequel les indices de quantification copiés pour une composante spectrale comprennent les indices de quantification de formes d'onde *(IF)* relatifs à cette composante spectrale.

6. Procédé de décodage selon la revendication 5, dans lequel l'analyse des similitudes entre les composantes spectrales du premier ensemble dans la première phase porte sur les indices de quantification des formes d'onde *(IF)*.

7. Décodeur audio comprenant des moyens de traitement de signal adaptés pour mettre en oeuvre chacune des étapes d'un procédé de décodage selon l'une quelconque des revendications 1 à 6.

8. Procédé de codage d'un signal audio (S), dans lequel on obtient au moins un ensemble de composantes spectrales à partir du signal audio, et on forme un flux binaire de sortie (Φ) incluant des indices (QE0m ; QSn ; QEn) de quantification de certaines au moins des composantes spectrales (E0m ; Sn ; En), **caractérisé en ce qu'**on sélectionne au moins une paire de composantes présentant une similitude maximale au sein de l'ensemble de composantes spectrales, **en ce qu'**on inclut dans le flux binaire de sortie une information d'identification de chaque paire de composantes sélectionnée, et **en ce que** certains au moins des indices de quantification sont inclus dans le flux binaire de sortie pour l'une seulement des composantes de chaque paire sélectionnée.

9. Procédé de codage selon la revendication 8, dans lequel l'ensemble de composantes spectrales (Sn ; En) résulte d'une décomposition en sous-bandes du signal audio (S).

10. Procédé de codage selon la revendication 8, dans lequel l'ensemble de composantes spectrales (E0m) résulte d'une décomposition en sous-bandes d'un signal d'erreur résiduelle (E0) produit par un premier étage (6) de codage du signal audio (S).

11. Procédé de codage selon l'une quelconque des revendications 8 à 10, dans lequel les composantes spectrales de l'ensemble sont traitées par segments temporels successifs, chaque segment temporel d'une composante spectrale étant représenté par le produit d'une forme d'onde appartenant à un dictionnaire et d'un gain, et dans lequel les indices de quantification qui sont inclus dans le flux binaire de sortie pour l'une seulement des composantes de chaque paire sélectionnée comprennent des indices *(IF)* identifiant les formes d'onde relatives aux composantes de ladite paire.

12. Procédé de codage selon la revendication 11, dans lequel, pour les deux composantes de chaque paire sélectionnée, des indices de quantification des gains *(GG, GR, σ)* sont calculés et inclus au moins en partie dans le flux binaire de sortie (Φ).

13. Procédé de codage selon la revendication 10 ou 11, dans lequel la sélection d'au moins une paire de composantes présentant une similitude maximale est effectuée par groupes de plusieurs segments temporels consécutifs.

14. Codeur audio, comprenant des moyens (4 ; 9) pour produire au moins un ensemble de composantes spectrales à partir d'un signal audio (S), des moyens (CE0m ; CSn ; CEn) de calcul d'indices de quantification *(IF, GG, GR, σ)* de certaines au moins des composantes spectrales de l'ensemble, et un multiplexeur (5) pour former un flux binaire de sortie (Φ) incluant certains au moins des indices de quantification calculés, **caractérisé en ce qu'**il comprend en outre des moyens d'analyse (25) pour sélectionner au moins une paire de composantes présentant une corrélation maximale au sein de l'ensemble de composantes spectrales, le multiplexeur (5) étant commandé pour inclure dans le flux binaire de sortie une information d'identification de chaque paire de composantes sélectionnée, et pour que certains au moins des indices de quantification soient inclus dans le flux binaire de sortie pour l'une seulement des composantes de chaque paire sélectionnée.

**15.** Codeur audio selon la revendication 14, dans lequel les moyens pour produire l'ensemble de composantes spectrales à partir du signal audio comprennent un banc (4) de filtres de décomposition en sous-bandes du signal audio (S).

**16.** Codeur audio selon la revendication 14, dans lequel les moyens pour produire l'ensemble de composantes spectrales à partir du signal audio comprennent un premier étage (6) de codage du signal audio, et un banc (9) de filtres de décomposition en sous-bandes d'un signal d'erreur résiduelle (E0) produit par le premier étage de codage.

**17.** Procédé de transcodage d'un flux binaire d'entrée (Φ) représentatif d'un signal audio (S) codé par fenêtres temporelles successives, pour former un flux binaire de sortie (Φ') de débit plus faible,
dans lequel la formation du flux de sortie comprend, pour une fenêtre de signal représentée par un nombre $A$ de bits ordonnés du flux d'entrée, la recopie d'un nombre $A$-$B$ de bits du flux d'entrée et la suppression d'un nombre $B$ de bits du flux d'entrée afin de diminuer le débit, et on détermine quels bits du flux d'entrée sont à supprimer à partir d'une information (MB) reçue d'un décodeur auquel est destiné le flux binaire de sortie, dans lequel le flux binaire d'entrée Φ) inclut des jeux d'indices de quantification associés à un ensemble de composantes spectrales respectives (E0m ; Sn ; En);
dans lequel on sélectionne au moins une paire de composantes présentant une similitude maximale au sein de l'ensemble de composantes spectrales, et on maintient dans le flux binaire de sortie (Φ') le jeu d'indices de quantification *(IF, GG, GR, σ)* associé à l'une des composantes de chaque paire sélectionnée, tandis qu'on supprime certains au moins des indices du jeu d'indices de quantification associé à l'autre des composantes de chaque paire sélectionnée et,
dans lequel on inclut dans le flux binaire de sortie (Φ') une information d'identification de chaque paire de composantes spectrales sélectionnée.

**18.** Procédé de transcodage selon la revendication 17, dans lequel chaque fenêtre de signal se compose d'un ou plusieurs segments temporels successifs, chaque segment temporel d'une composante spectrale étant représenté par le produit d'une forme d'onde appartenant à un dictionnaire et d'un gain, chaque jeu d'indices de quantification associé à une composante de l'ensemble comprenant d'une part des indices *(IF)* identifiant les formes d'onde et d'autre part des indices *(GG, GR, σ)* identifiant les gains correspondants, et dans lequel les indices de quantification qui sont supprimés du flux binaire de sortie (Φ') pour l'une seulement des composantes de chaque paire sélectionnée comprennent les indices *(IF)* identifiant les formes d'onde relatives aux composantes de ladite paire.

**19.** Procédé de transcodage selon la revendication 18, dans lequel les indices identifiant respectivement les gains relatifs aux deux composantes d'une paire sélectionnée sont maintenus dans le flux binaire de sortie (Φ').

**20.** Procédé de transcodage selon l'une des revendications 17 à 19, dans lequel la sélection d'une paire de composantes présentant une similitude maximale au sein de l'ensemble de composantes spectrales est effectuée à partir de l'information (MB) reçue d'un décodeur auquel est destiné le flux binaire de sortie (Φ').

**21.** Procédé de transcodage selon la revendication 17, dans lequel le flux binaire d'entrée (Φ) inclut des jeux d'indices de quantification associés à un ensemble de composantes spectrales respectives, et dans lequel les bits supprimés comprennent au moins un jeu d'indices de quantification associé à une composante spectrale.

**22.** Procédé de transcodage selon la revendication 21, dans lequel la ou les composantes spectrales associées aux jeux d'indices de quantification supprimés sont choisies selon l'origine du signal audio codé (S).

**23.** Procédé de transcodage selon la revendication 21, dans lequel la ou les composantes spectrales associées aux jeux d'indices de quantification supprimés sont choisies selon des caractéristiques du décodeur auquel est destiné le flux binaire de sortie (Φ').

**24.** Procédé de transcodage selon la revendication 17, dans lequel le flux binaire d'entrée (Φ) inclut, pour chaque fenêtre du signal, au moins un indice permettant de retrouver, dans un dictionnaire de référence contenant $2^Q$ vecteurs, un vecteur de paramètres de codage utilisable pour construire une version décodée du signal, dans lequel ledit indice inclus dans le flux d'entrée est formé de $Q$-$q$ bits qui, complétés par $q$ bits arbitraires de positions prédéterminées, définissent un groupe de $2^q$ adresses de vecteurs dans le dictionnaire de référence, $q$ étant un entier tel que $q{\geq}0$, et dans lequel, dans le flux de sortie, on remplace l'indice de $Q$-$q$ bits par un indice traduit de $Q$-$p$ bits qui, complétés par $p$ bits arbitraires de positions prédéterminées, définissent un groupe de $2^p$ adresses incluant ledit groupe de $2^q$ adresses, p étant un entier tel que $q<p<Q.$

**25.** Procédé de transcodage selon la revendication 24, dans lequel le dictionnaire de référence est ordonné de façon à vérifier un critère de distances minimales entre les vecteurs appartenant à chaque groupe de $2^p$ vecteurs du dictionnaire de référence dont les adresses respectives ne diffèrent que par les $p$ bits ayant lesdites positions prédéterminées.

**26.** Procédé de transcodage selon revendication 24 ou 25, dans lequel le flux binaire d'entrée inclut des jeux d'indices de quantification associés à un ensemble de composantes spectrales respectives, chaque jeu d'indices associé à une composante de l'ensemble comportant au moins un indice traduisible par réduction de son nombre de bits et permettant de retrouver un vecteur de paramètres de codage.

**27.** Procédé de transcodage selon l'une quelconque des revendications 17 à 26, dans lequel le flux binaire d'entrée (Φ) est lu dans une mémoire (35, 35a, 35b) d'un serveur audio.

**28.** Procédé de transcodage selon l'une quelconque des revendications 17 à 27, dans lequel le flux binaire d'entrée (Φ) est reçu sur une liaison d'un réseau de télécommunications et le flux binaire de sortie (Φ') est réémis sur une autre liaison du réseau ou sur une liaison d'un autre réseau.

**29.** Transcodeur comprenant des moyens de traitement de signal adaptés pour mettre en oeuvre chacune des étapes d'un procédé de transcodage selon l'une quelconque des revendications 17 à 28.


**Claims**

**1.** Method for decoding a digital data stream (Φ,Φ') representing an audio signal (S), wherein at least a group of spectral components is calculated from the quantification indices included in the digital data stream, and where the spectral components of the said group are combined during the construction of a decoded version (S") of the audio signal, each component (E'0m ; S'n ; E'n) of the group being associated with a set of quantification indices (QE0m Qsn ; Qen) used in the calculation of this component, wherein the digital data stream (Φ) includes identification information for at least one pair of spectral components, each identified pair comprising a first and a second component, and where the second spectral component of at least one identified pair is associated with a set of quantification indices of which at least some are copied from a set of indices read from the data stream and associated with the first spectral component of the said identified pair.

**2.** A decoding method according to claim 1, wherein the spectral components of the group are processed by successive time segments, each time segment of a spectral component being determined by the product of a waveform belonging to a library and a gain, the said waveform and the said gain being identified by respective quantification indices *(IF, GG, GR, σ)* belonging to an associated set of indices, and where the quantification indices copied for a spectral component comprise the waveform quantification indices (*IF*) corresponding to this spectral component.

**3.** A decoding method according to claim 2, wherein at least a part of the gain quantification indices belonging to the set of indices associated with the second component of each identified pair is read from the digital data stream (Φ) in a manner independent of the reading of the set of indices associated with the first component of the said pair.

**4.** A decoding method a digital data stream (Φ,Φ') representing an audio signal (S), wherein at least one group of spectral components is calculated from the quantification indices included in the data stream, and the spectral components of the said group are combined during the construction of a decoded version (S") of the audio signal, each component (E'0m ; S'n ; E'n) of the group being associated with a set of quantification indices (QE0m ; Qsn ; Qen) used in the calculation of this component, wherein the data stream (Φ), Φ') has a variable rate, the method comprising a first phase in which the data stream (Φ) includes sets of respective quantification indices for calculating a first group of spectral components and wherein the correlations between spectral components of the first group are analysed, and a second phase, in which the digital data stream (Φ') of lower frequency than in the first phase includes sets of quantification indices for calculating only a part of the spectral components of the first group, and wherein at least one spectral component of the first group not belonging to the said part is calculated from the indices at least partially copied from a set of quantification indices read from the data stream (Φ') and associated with a component belonging to the said part, for which a maximum correlation was determined in the first phase.

**5.** A decoding method according to claim 4, wherein the spectral components of the group are processed by successive time segments, each time segment of a spectral component being determined by the product of a waveform belonging to a library and a gain, the said waveform and the said gain being identified by respective quantification indices *(IF, GG, GR, σ)* belonging to an associated set of indices, and where the quantification indices copied for a spectral component comprise the waveform quantification indices *(IF)* corresponding to this spectral component.

6.  A decoding method according to claim 5, wherein the analysis of the correlations between spectral components of the first group in the first phase is applied to the waveform quantification indices *(IF).*

7.  Audio decoder comprising signal processing means suitable for carrying out each one of the steps of a decoding method according to claim 1.

8.  Method for coding an audio signal (S), wherein at least one group of spectral components is obtained from the audio signal, and the digital output data stream (Φ) is produced including quantification indices (QE0m ; Qsn ; Qen) for at least some of the spectral components (E0m; Sn; En), wherein at least one pair of components exhibiting a maximum correlation out of the group of spectral components is selected, and wherein an identification code is included in the output data stream for each pair of components selected, and wherein at least some of the quantification indices are included in the digital output stream for only one of the components of each pair selected.

9.  A coding method according to claim 8, wherein the group of spectral components (Sn ; En) is produced by a decomposition of the audio signal (S) into sub-bands.

10. A coding method according to claim 8, wherein the group of spectral components (E0m) is produced by a decomposition of the residual error signal (E0), generated by a first stage (6) of audio signal coding (S), into sub-bands.

11. A coding method according to claim 8, wherein the spectral components of the group are processed by successive time segments, each spectral component time segment being represented by the product of a library waveform and a gain, and wherein the quantification indices that are included in the output data stream for only one of the components of each pair selected comprise indices *(IF)* identifying the waveforms relative to the components of the said pair.

12. A coding method according to claim 11, wherein, for both components of each pair selected, the gain quantification indices (*GG, GR*, σ) are calculated and included, at least in part, in the digital output data stream (Φ).

13. A coding method according to claim 10 and 11, wherein the selection of at least one pair of components exhibiting a maximum correlation is effected by groups of several consecutive time segments.

14. Audio coder comprising means (4 ; 9) for producing at least one group of spectral components from an audio signal (S), means (CE0m ; Csn ; Cen) for calculating the quantification indices *(IF, GG, GR,* σ) for at least some of the spectral components of the group, and a multiplexer (5) to generate an output data stream (Φ) including at least some of the calculated quantification indices, wherein the audio coder comprises, in addition, means of analysis (25) for selecting at least one pair of components exhibiting a maximum correlation out of the group of spectral components, the multiplexer (5) being controlled to include identification information for each pair of components selected in the output data stream, and so that at least some of the quantification indices be included in the output data stream for only one of the components of each pair selected.

15. Audio coder according to claim 14, wherein the means of producing the group of spectral components from the audio signal comprises a bank of filters (4) for the decomposition of the audio signal (S) into sub-bands.

16. Audio coder according to claim 14, wherein the means for producing the group of spectral components from the audio signal comprises a first stage (6) for coding the audio signal, and a bank of filters (9) for the decomposition of the residual error signal (E0), produced by the first coding stage, into sub-bands.

17. Method for transcoding of a digital input data stream (Φ) representing an audio signal (S) coded by successive time windows, to generate a digital output data stream (Φ') of lower data rate, wherein the formation of the output stream comprises, for a signal window represented by a number of ordered input bits, *A*, the copying of a number of input bits, *A - B,* and the suppression of a number of bits, *B*, from the input stream in order to reduce the data rate, and where the bits to be suppressed from the input stream are determined by information (MB) received from a decoder to which the output data stream will be routed, wherein the digital input data stream (Φ) includes sets of quantification indices associated, respectively, with a group of spectral components (E0m ; Sn ; En) ;

wherein at least one pair of components exhibiting a maximum correlation out of the group of spectral components is selected, and wherein the set of quantification indices *(IF, GG, GR,* σ) associated with one of the components of each pair selected is retained in the digital output stream (Φ'), while at least some of the indices of the set of quantification indices associated with the other component of each pair selected are eliminated ; and identification information for each pair of spectral components selected is included in the output data stream (Φ')

18. Transcoding method according to claim 17, wherein each signal window is composed of one or more successive time segments, each spectral component time segment being represented by the product of a library waveform and a gain, each set of quantification indices associated with a component of the group comprising, on the one hand indices (*IF*) identifying the waveforms, and on the other indices (*GG, GR,* σ) identifying the corresponding gains, and wherein the quantification indices which are suppressed from the output data stream (Φ') for only one of the components of each pair selected comprises indices (*IF*) identifying the waveforms relative to the components of the said pair.

19. Transcoding method according to claim 18, wherein the indices respectively identifying the gains relative to the two components of a pair selected are conserved in the digital output data stream (Φ').

20. Transcoding method according to anyone of claims 17 through 19, wherein the selection of a pair of components exhibiting a maximum correlation out of the group of spectral components is carried out based on information (MB) received from the decoder to which the digital output stream (Φ') is routed.

21. Transcoding method according to claim 17, wherein the digital input data stream (Φ) includes sets of quantification indices associated with a group of spectral components, respectively, and wherein the bits eliminated comprise at least one set of quantification indices associated with a spectral component.

22. Transcoding method according to claim 21, wherein the spectral components) associated with suppressed quantification indices are chosen depending on the origin of the coded audio signal (S).

23. Transcoding method according to claim 21, wherein the spectral component(s) associated with suppressed quantification indices are chosen depending on the characteristics of the decoder to which the output binary data stream (Φ') is directed.

24. Transcoding method according to claim 17, wherein the digital input data stream (Φ') includes, for each signal window, at least one index which points to a coding parameter vector in a reference library containing $2^Q$ vectors, which can be used to construct a decoded version of the signal, wherein the said index included in the input data stream is composed of $Q - q$ bits which, when completed by $q$ arbitrary bits in predetermined positions, define a group of $2^q$ vector addresses in the reference library, $q$ being an integer such that $q>0$, and wherein the index of $Q - q$ bits is replaced by a translated index of $Q - p$ bits in the output stream, which, when completed by $p$ arbitrary bits in predetermined positions, define a group of $2^p$ addresses including the said group of $2^q$ addresses, $p$ being an integer such that $q<p<Q$.

25. Transcoding method according to claim 24, wherein the reference library is ordered in such a way as to check a minimum distance criteria between vectors belonging to each group of $2^p$ reference library vectors whose respective addresses only differ by the $p$ bits having the predetermined positions.

26. Transcoding method according to claim 24 or 25, wherein the digital input stream includes sets of quantification indices associated with a group of spectral components, respectively, and wherein each set of indices associated with a component of the group consists of at least one index which can be translated by reduction of its number of bits and which points to a coding parameter vector.

27. Transcoding method according to anyone of claims 17 through 26, wherein the digital input data stream (Φ) is read from the memory (35, 35a, 35b) of an audio server.

28. Transcoding method according to anyone of claims 17 through 27, wherein the digital input data stream (Φ) is received via a telecommunications network link and the digital output data stream (Φ') is retransmitted via another link in the network or via a link in another network.

**29.** Transcoder comprising means for signal processing suitable for carrying out each one of the steps of a transcoding method according to claim 17.

**Patentansprüche**

**1.** Verfahren zur Dekodierung eines ein Audiosignal (S) darstellenden binären Flusses (Φ, Φ'), bei dem man aus in dem binären Fluss enthaltenen Quantisierungsindizes mindestens eine Einheit von Spektralkomponenten errechnet und die Spektralkomponenten dieser Einheit bei einer Konstruktion einer dekodierten Version (S") des Audiosignals kombiniert, wobei jede Komponente (E'0m; S'n; E'n) der Einheit einem Satz von Quantisierungsindizes (QEom; QSn; QEn) zugeordnet wird, die bei der Berechnung dieser Komponente verwendet werden, bei dem der binäre Fluss (Φ) eine Information zur Identifizierung mindestens eines Paares von Spektralkomponenten enthält, wobei jedes identifizierte Paar eine erste Komponente und eine zweite Komponente umfaßt, und bei dem man die zweite Spektralkomponente mindestens eines identifizierten Paars einem Satz von Quantisierungsindizes zuordnet, von denen mindestens einige der Indizes aus einem Indexsatz kopiert werden, der in dem binären Fluß gelesen wird und der ersten Spektralkomponente des identifizierten Paars zugeordnet ist.

**2.** Dekodierungsverfahren nach Anspruch 1, bei dem die Spektralkomponenten der Einheit in aufeinanderfolgenden Zeitsegmenten behandelt werden, wobei jedes Zeitsegment einer Spektralkomponente durch das Produkt aus einer zu einem Wörterbuch gehörenden Wellenform und einer Verstärkung erhalten wird, wobei diese Wellenform und diese Verstärkung jeweils durch zu dem zugeordneten Indexsatz gehörende Quantisierungsindizes *(IF, GG, GR, σ)* identifiziert werden, und bei dem die kopierten Quantisierungsindizes bei einer Spektralkomponente die Quantisierungsindizes von diese Spektralkomponente betreffenden Wellenformen (*IF*) umfassen.

**3.** Dekodierungsverfahren nach Anspruch 2, bei dem mindestens ein Teil der Quantisierungsindizes der Verstärkungen, die zu dem der zweiten Komponente jedes identifizierten Paars zugeordneten Indexsatz gehören, im binären Fluß (Φ) unabhängig von der Lesung des der ersten Komponente des Paars zugeordneten Indexsatzes gelesen wird.

**4.** Verfahren zur Dekodierung eines ein Audiosignal (S) darstellenden binären Flusses (Φ, Φ'), bei dem man aus in dem binären Fluß enthaltenen Quantisierungsindizes mindestens eine Einheit von Spektralkomponenten errechnet und bei einer Konstruktion einer dekodierten Version (S") des Audiosignals die Spektralkomponenten dieser Einheit kombiniert, wobei jede Komponente (E'0m; S'n; E'n) der Einheit einem Satz von Quantisierungsindizes (QE0m; QSn; Qen) zugeordnet wird, die bei der Berechnung dieser Komponente verwendet werden, bei dem der binäre Fluß (Φ, Φ') einen veränderlichen Durchsatz hat, wobei das Verfahren eine erste Phase umfaßt, in der der binäre Fluß (Φ) Sätze von jeweiligen Quantisierungsindizes zum Berechnen einer ersten Einheit von Spektralkomponenten enthält und in der man Ähnlichkeiten zwischen den Spektralkomponenten der ersten Einheit analysiert, sowie eine zweite Phase, in der der binäre Fluß (Φ') mit geringerem Durchsatz als in der ersten Phase Sätze von jeweiligen Quantisierungsindizes zum Berechnen nur eines Teils der Spektralkomponenten der ersten Einheit enthält und in der man mindestens eine nicht zu diesem Teil gehörende Spektralkomponente der ersten Einheit aus Indizes berechnet, die mindestens teilweise aus einem Satz von Quantisierungsindizes kopiert sind, der in dem binären Fluß (Φ') gelesen wird und der einer zu diesem Teil gehörenden Komponente zugeordnet ist, bei der in der ersten Phase ponente zugeordnet ist, bei der in der ersten Phase eine maximale Ähnlichkeit festgestellt wurde.

**5.** Dekodierungsverfahren nach Anspruch 4, bei dem die Spektralkomponenten der Einheit in aufeinanderfolgenden Zeitsegmenten behandelt werden, wobei jedes Zeitsegment einer Spektralkomponente durch das Produkt aus einer zu einem Wörterbuch gehörenden Wellenform und einer Verstärkung erhalten wird, wobei diese Wellenform und diese Verstärkung jeweilige Quantisierungsindizes *(IF, GG, GR, GR, σ)* identifiziert werden, die zu dem zugeordneten Indexsatz gehören, und bei dem die bei einer Spektralkomponente kopierten Quantisierungsindizes die diese Spektralkomponente betreffenden Quantisierungsindizes von Wellenformen (*IF*) umfassen.

**6.** Dekodierungsverfahren nach Anspruch 5, bei dem die Analyse der Ähnlichkeiten zwischen den Spektralkomponenten der ersten Einheit in der ersten Phase die Quantisierungsindizes von Wellenformen (*IF*) betrifft.

**7.** Audio-Dekodierer, umfassend Signalverarbeitungsmittel, die zur Durchführung jedes der Schritte eines Dekodierungsverfahrens nach einem der Ansprüche 1 bis 6 ausgelegt sind.

8. Verfahren zur Kodierung eines Audiosignals (S), bei dem man aus dem Audiosignal mindestens eine Einheit von Spektralkomponenten erhält und einen binären Ausgangsfluß (Φ) bildet, der Indizes (QE0m; QSn; QEn) zur Quantisierung von mindestens manchen der Spektralkomponenten (E0m; Sn; En) enthält, **dadurch gekennzeichnet, daß** man mindestens ein Paar von Komponenten wählt, die eine maximale Ähnlichkeit innerhalb der Einheit von Spektralkomponenten aufweisen, daß man in den binären Ausgangsfluß eine Information zur Identifizierung jedes gewählten Komponentenpaars einfügt und daß mindestens manche der Quantisierungsindizes in dem binären Ausgangsfluß nur bei einer der Komponenten jedes gewählten Paars enthalten sind.

9. Kodierungsverfahren nach Anspruch 8, bei dem sich die Einheit von Spektralkomponenten (Sn; En) aus einer Zerlegung des Audiosignals (S) in Unterbänder ergibt.

10. Kodierungsverfahren nach Anspruch 8, bei dem die Einheit von Spektralkomponenten (E0m) sich aus einer Zerlegung eines durch eine erste Stufe (6) zur Kodierung des Audiosignals (S) erzeugten Restfehlersignals (E0) in Unterbänder ergibt.

11. Kodierungsverfahren nach einem der Ansprüche 8 bis 10, bei dem die Spektralkomponenten der Einheit in aufeinanderfolgenden Zeitsegmenten behandelt werden, wobei jedes Zeitsegment einer Spektralkomponente durch das Produkt aus einer zu einem Wörterbuch gehörenden Wellenform und einer Verstärkung dargestellt wird, und bei dem die Quantisierungsindizes, die bei nur einer der Komponenten jedes gewählten Paars in dem binären Fluß enthalten sind, Indizes (*IF*) umfassen, die die Wellenformen identifizieren, die die Komponenten dieses Paars betreffen.

12. Kodierungsverfahren nach Anspruch 11, bei dem bei den beiden Komponenten jedes gewählten Paars Quantisierungsindizes der Verstärkungen (*GG, GR,* σ) errechnet werden und mindestens zum Teil in den binären Ausgangsfluß (Φ) eingefügt werden.

13. Kodierungsverfahren nach Anspruch 10 oder 11, bei dem die Wahl mindestens eines Paars von Komponenten, die eine maximale Ähnlichkeit aufweisen, in Gruppen von mehreren aufeinanderfolgenden Zeitsegmenten ausgeführt wird.

14. Audiokodierer, umfassend Mittel (4; 9) zum Erzeugen mindestens einer Einheit von Spektralkomponenten aus einem Audiosignal (S), Mittel (CE0m; CSn; CEn) zum Berechnen von Quantisierungsindizes (*IF, GG, Gr,* σ) von mindestens manchen Spektralkomponenten der Einheit und einen Multiplexer (5) zur Bildung eines binären Ausgangsflußes (Φ), der mindestens manche der errechneten Quantisierungsindizes enthält, **dadurch gekennzeichnet, daß** er außerdem Analysemittel (25) zum Wählen mindestens eines Paars von Komponenten aufweist, die eine maximale Korrelation innerhalb der Einheit von Spektralkomponente aufweisen, wobei der Multiplexer (5) gesteuert wird, um in den binären Ausgangsfluß eine Information zur Identifizierung jedes gewählten Komponentenpaars einzufügen, und so, daß mindestens manche der Quantisierungsindizes nur bei einer der Komponenten jedes Paars in den binären Ausgangsfluß eingefügt werden.

15. Audiokodierer nach Anspruch 14, bei dem die Mittel zum Erzeugen der Einheit von Spektralkomponenten aus dem Audiosignal eine Bank (4) von Filtern zur Zerlegung des Audiosignals (S) in Unterbänder aufweisen.

16. Audiokodierer nach Anspruch 14, bei dem die Mittel zum Erzeugen der Einheit von Spektralkomponenten aus dem Audiosignal eine erste Stufe (6) zur Kodierung des Audiosignals und eine Bank (9) von Filtern zur Zerlegung eines von der ersten Kodierungsstufe erzeugten Restfehlersignals (E0) in Unterbänder umfassen.

17. Verfahren zur Transkodierung eines binären Eingangsflusses (Φ), der ein in aufeinanderfolgenden Zeitfenstern kodiertes Audiosignal (S) darstellt, zur Bildung eines binären Ausgangsflusses (Φ') mit kleinerem Durchsatz, bei dem die Bildung des Ausgangsflusses bei einem Signalfenster, das durch eine Anzahl *A* von geordneten Bits des Eingangsflusses dargestellt wird, die Umkopie einer Anzahl *A-B* von Bits des Eingangsflusses und die Entfernung einer Anzahl *B* von Bits des Eingangsflusses umfaßt, um den Durchsatz zu verkleinern, und man bestimmt, welche Bits des Eingangsflusses aus einer Information (MB) zu entfernen sind, die von einem Dekoder erhalten wird, für den der binäre Ausgangsfluß bestimmt ist, bei dem der binäre Eingangsfluß (Φ) Sätze von Quantisierungsindizes enthält, die einer Einheit von jeweiligen Spektralkomponenten (E0m; Sn; En) zugeordnet sind; bei dem man mindestens ein Paar von Komponenten wählt, die innerhalb der Einheit von Spektralkomponenten eine maximale Ähnlichkeit aufweisen, und man in dem binären Ausgangsfluß (Φ') den einer der Komponenten jedes gewählten Paars zugeordneten Satz von Quantisierungsindizes (*IF, GG, GR,* σ) behält, während man mindestens manche der Indizes des der anderen der Komponenten jedes gewählten Paars zugeordneten Satzes von Quantisierungsindizes entfernt;

und bei dem man in den binären Ausgangsfluß (Φ') eine Information zur Identifizierung jedes gewählten Paars von Spektralkomponenten einfügt.

18. Transkodierungsverfahren nach Anspruch 17, bei dem jedes Signalfenster sich aus einem oder mehreren aufeinanderfolgenden Zeitsegmenten zusammensetzt, wobei jedes Zeitsegment einer Spektralkomponente durch das Produkt aus einer zu einem Wörterbuch gehörenden Wellenform und einer Verstärkung dargestellt wird, wobei jeder einer Komponente der Einheit zugeordnete Satz von Quantisierungsindizes einerseits die Wellenformen identifizierende Indizes (*IF*) und andererseits die entsprechenden Verstärkungen identifizierende Indizes (*GG, GR, σ*) umfaßt, und bei dem die Quantisierungsindizes, die bei nur einer der Komponenten jedes gewählten Paars aus dem binären Ausgangsfluß (Φ') entfernt werden, die Indizes (*IF*) umfassen, die die sich auf die Komponenten dieses Paars beziehenden Wellenformen identifizieren.

19. Transkodierungsverfahren nach Anspruch 18, bei dem die Indizes, die jeweils die die beiden Komponenten eines gewählten Paars betreffenden Verstärkungen identifizieren, in dem binären Ausgangsfluß (Φ') behalten werden.

20. Transkodierungsverfahren nach einem der Ansprüche 17 bis 19, bei dem die Wahl eines Paars von Komponenten, die innerhalb der Einheit von Spektralkomponenten eine maximale Ähnlichkeit aufweisen, ausgehend von der Information (MB) durchgeführt wird, die von einem Dekoder erhalten wird, für den der binäre Ausgangsfluß (Φ') bestimmt ist.

21. Transkodierungsverfahren nach Anspruch 17, bei dem der binäre Eingangsfluß (Φ) einer Einheit von jeweiligen Spektralkomponenten zugeordnete Sätze von Quantisierungsindizes enthält und bei dem die entfernten Bits mindestens einen einer Spektralkomponente zugeordneten Satz von Quantisierungsindizes umfassen.

22. Transkodierungsverfahren nach Anspruch 21, bei dem die den Sätzen von entfernten Quantisierungsindizes zugeordnete(n) Spektralkomponente(n) entsprechend dem Ursprung des kodierten Audiosignals (S) ausgewählt wird/werden.

23. Transkodierungsverfahren nach Anspruch 21, bei dem die den Sätzen von entfernten Quantisierungsindizes zugeordnete (n) Spektralkomponente(n) entsprechend den Kenngrößen des Dekoders ausgewählt wird/werden, für den der binäre Ausgangsfluß (Φ') bestimmt ist.

24. Transkodierungsverfahren nach Anspruch 17, bei dem der binäre Eingangsfluß (Φ) bei jedem Signalfenster mindestens einen Index enthält, der in einem Bezugswörterbuch, das $2^Q$ Vektoren enthält, das Auffinden eines Vektors von Kodierungsparametern gestattet, der zur Konstruktion einer dekodierten Version des Signals verwendbar ist, bei dem dieser im Eingangsfluß enthaltene Index von $Q$-$q$ Bits gebildet ist, die, durch $q$ beliebige Bits mit vorbestimmten Stellen ergänzt, eine Gruppe von $2^q$ Adressen von Vektoren im Bezugswörterbuch definieren, wobei $q$ eine solche ganze Zahl ist, daß $q \geq 0$, und bei dem man im Ausgangsfluß den Index von $Q$-$q$ Bits durch einen übersetzten Index von $Q$-$p$ Bits ersetzt, die, durch $p$ beliebige Bits mit vorbestimmten Stellen ergänzt, eine Gruppe von $2^p$ Adressen definieren, die diese Gruppe von $2^q$ Adressen enthält, wobei $p$ eine solche ganze Zahl ist, daß $q < p < Q$.

25. Transkodierungsverfahren nach Anspruch 24, bei dem das Bezugswörterbuch so geordnet ist, daß ein Kriterium von Mindestabständen zwischen den Vektoren, die zu jeder Gruppe von $2^p$ Vektoren des Bezugswörterbuchs gehören, bestätigt wird, deren jeweilige Adressen sich nur durch die p Bits mit den vorbestimmten Stellen unterscheiden.

26. Transkodierungsverfahren nach Anspruch 24 oder 25, bei dem der binäre Eingangsfluß einer Einheit von jeweiligen Spektralkomponenten zugeordnete Sätze von Quantisierungsindizes enthält, wobei jeder einer Komponente der Einheit zugeordnete Indexsatz mindestens einen Index umfaßt, der durch Reduzierung seiner Bitzahl übersetzbar ist und das Auffinden eines Vektors von Kodierungsparametern gestattet.

27. Transkodierungsverfahren nach einem der Ansprüche 17 bis 26, bei dem der binäre Eingangsfluß (Φ) in einem Speicher (35, 35a, 35b) eines Audioservers gelesen wird.

28. Transkodierungsverfahren nach einem der Ansprüche 17 bis 27, bei dem der binäre Eingangsfluß (Φ) auf einer Verbindung eines Telekommunikationsnetzes empfangen wird und der binäre Ausgangsfluß ($\Phi'$) auf einer anderen Verbindung des Netzes oder auf einer Verbindung eines anderen Netzes wieder gesendet wird.

29. Transkoder, umfassend Signalverarbeitungsmittel, die zur Durchführung jedes der Schritte eines Transkodierungsverfahrens nach einem der Ansprüche 17 bis 28 ausgelegt sind.

FIG.1.

EP 1 037 196 B1

FIG. 2.

25

0-4kHz (QS0) | 0-0,5 kHz (QE01) | 0,5-1kHz (QE02) | 1-1,5 kHz (QE03) | 1,5-2 kHz (QE04)

| H | G.723 | 1 | GG | GR | IF | σ | 1 | GG | GR | IF | σ | 1 | GG | GR | IF | σ | 1 | GG | GR | IF | σ |

2-2,5 kHz (QE05) | 2,5-3 kHz (QE06) | 3-3,5kHz (QE07) | 3,5-4kHz (QE08)

| 1 | GG | GR | IF | σ | 1 | GG | GR | IF | σ | 1 | GG | GR | IF | σ | 1 | GG | GR | IF | σ |

| 1 | GG | GR | IF | σ | GG | GR | IF | σ | 0 | 1 | GG | GR | IF | σ | GG | GR | IF | σ | 0 | 0 | 0 |

(QS1) 4-5kHz

4-5kHz

(QS2) 5-6kHz

5-6kHz    6-8kHz

FIG.3.

EP 1 037 196 B1

# FIG.4.

$V_{0,0}$
$W_0$

$V_{1,0}$
$V_{1,1}$
$W_1$

$V_{2,0}$
$V_{2,1}$
$V_{2,2}$
$V_{2,3}$
$W_2$

$V_{3,0}$
$V_{3,1}$
$V_{3,2}$
$V_{3,3}$
$V_{3,4}$
$V_{3,5}$
$V_{3,6}$
$V_{3,7}$
$W_3$

$V_{4,0}$
$V_{4,1}$
$V_{4,2}$
$V_{4,3}$
$V_{4,4}$
$V_{4,5}$
$V_{4,6}$
$V_{4,7}$
$V_{4,8}$
$V_{4,9}$
$V_{4,10}$
$V_{4,11}$
$V_{4,12}$
$V_{4,13}$
$V_{4,14}$
$V_{4,15}$
$W_4$

$\Phi \longrightarrow$ | TAMPON | $\longrightarrow \Phi'$

25

GESTION DÉBIT $\longleftarrow$ MB

$d$

26

# FIG.5.

EP 1 037 196 B1

FIG.6.

QEOM ... QEO1

ANALYSE ÉNERGIES

φ → φ'

27 28 29

FIG.7.

TRANSCODEUR

MB

35 36

FIG.8.

PAROLE 35a → TRANSCODEUR 36a

MUSIQUE 35b → TRANSCODEUR 36b

28

FIG.9.

EP 1 037 196 B1

FIG.10 .

FIG.11 .

FIG.12.

FIG.13.